# EUROPEAN PATENT SPECIFICATION

(11) **EP 2 902 665 B1**
(45) Date of publication and mention of the grant of the patent: **07.08.2019**
(21) Application number: 14197308.1
(22) Date of filing: 11.12.2014
(51) Int. Cl.: F16H 59/02, F16H 61/22, G05G 5/05, F16H 61/24

(54) **Multi-directional input operation device and vehicle shift device using the multi-directional input operation device**
Betriebsvorrichtung mit multidirektionaler Eingabe und Fahrzeugschaltvorrichtung mit Betriebsvorrichtung mit multidirektionaler Eingabe
Dispositif d'opération d'entrée multidirectionnel et dispositif de changement de vitesse de véhicule utilisant ledit dispositif

(30) Priority: 31.01.2014 JP 2014016539
(43) Date of publication of application: 05.08.2015
(73) Proprietor: Alps Alpine Co., Ltd., Tokyo 145-8501 (JP)
(72) Inventor: Uenomachi, Takashi, Tokyo 145-8501 (JP)
(74) Representative: Schmitt-Nilson Schraud Waibel Wohlfrom Patentanwälte Partnerschaft mbB

(56) References cited:
- EP-A1- 1 615 250
- DE-A1-102005 023 926
- FR-A1- 2 909 741
- US-A1- 2003 188 594

## Description

### BACKGROUND OF THE INVENTION

### 1. Field of the Invention

The present invention relates to a multi-directional input operation device used for an operation body that is operated when being tilted, and more particularly relates to a multi-directional input operation device using a magnetic body and a vehicle shift device using the multi-directional input operation device.

### 2. Description of the Related Art

In general, an operation body that is operated when being tilted is used for a remote controller of any of various electronic devices, such as a television system or a video player/recorder; an input device of a game machine; an operation device for a vehicle; etc. In particular, the input device of the game machine, the operation device for the vehicle, etc., uses a multi-directional input operation device of a type that an operator grips an operation body and performs a tilting operation in multiple directions. Regarding the operation device for the vehicle etc., to increase operation feeling, it has been desired that an operation sense, such as a tactile feel (click feel) or an operation feel, is provided when the operation body is tilted and hence a switching operation is performed.

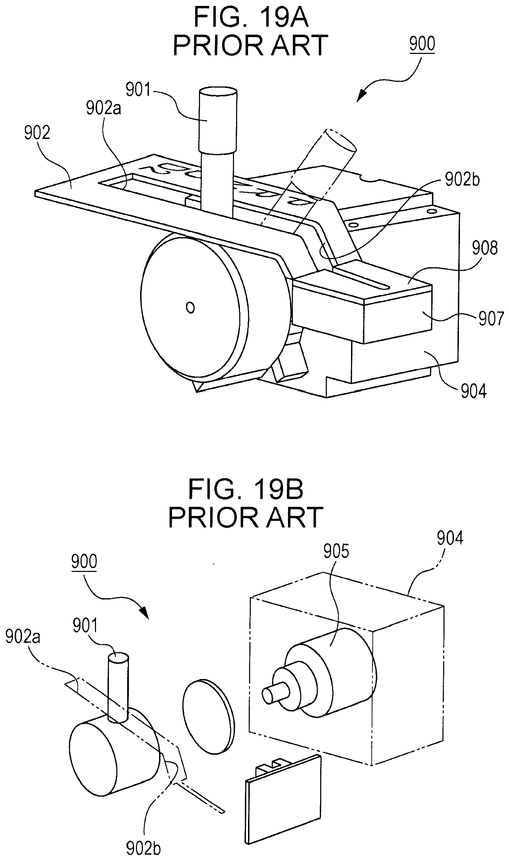

As an operation device having the operation sense, Japanese Unexamined Patent Application Publication No. 2010-260442 (related art) suggests a gearshift device 900 as shown in Figs. 19A and 19B. Figs. 19A and 19B are illustrations describing the gearshift device 900 for an automobile according to related art. Fig. 19A is a perspective view of the gearshift device for the automobile. Fig. 19B is an exploded perspective view showing a basic configuration of the gearshift device 900.

The gearshift device 900 shown in Figs. 19A and 19B includes a shift lever 901 that is held so that the shift lever 901 can be tilted and that can be manually operated; a lever guide plate 902 having a guide lane 902a and a retraction lane 902b opened therein to allow the shift lever 901 to tilt and to penetrate therethrough; position detecting means for detecting a tilting position of the shift lever 901; a motor (actuator) 905 that is arranged in a case 904 and can drive the shift lever 901; a control unit (microcomputer) that controls driving of the motor 905 in accordance with a detection signal or the like of the position detecting means; a lever housing chamber 907 that is a space continuous to the retraction lane 902b and can house a distal-end portion of the shift lever 901; and a hiding member 908 provided at the lever housing chamber 907.

The gearshift device 900 is configured such that, when an operator (driver) grips the distal-end portion of the shift lever 901 and tilts the shift lever 901 in a front-rear direction along the guide lane 902a, a transmission is switched to a predetermined shift position in accordance with a tilting position (operation position) of the shift lever 901. Also, the gearshift device 900 uses a force sense applying technology that artificially creates an operation sense. When the control unit controls driving of the motor 905 in accordance with the detection signal of the position detecting means, a holding force corresponding to the operation position of the shift lever 901 and an operation sense such as a click feel are fed back to the operator. Also, since the shift lever 901 and the motor 905 are connected in this gearshift device 900, the shift lever 901 can be automatically tilted by using this motor 905.

However, with the configuration of related art, since the shift lever 901 is connected with the motor 905, a tilting motion of the shift lever 901 in one direction in which the motor 905 rotates is easily provided; however, a tilting motion in the other direction of the shift lever 901 additionally requires a certain kind of tilting mechanism. Owing to this, it is difficult to easily apply the configuration of related art to the multi-directional input operation device.

Another exemplary operation device for an automobile according to FR 2 909 741 A1 comprises lever which is pivotable attached to a support body and also all the features of the preamble of claim 1. Permanent magnets which are attached to or included in the lever interact with other permanent magnets which are mounted on the support body. By way of magnetic attraction or repulsion stable positions of the lever can be defined and the lever can be moved into one of its stable positions.

A further example of an operation device for an automobile is shown in DE 10 2005 023 926 A1. The operation device comprises a gear lever and an electric actuator which can put a shift stop for the gear lever 1 into or out of power. A limiting element is arranged in an actuating travel of the gear lever, such that the expansion within an actuating travel of the gear lever is variable by the actuator.

### SUMMARY OF THE INVENTION

The present invention addresses the above-described problems and provides a multi-directional input operation device that allows an operation member to be operated in multiple directions and can automatically move the operation member at a desirable timing, and to provide a vehicle shift device using the multi-directional input operation device.

To address the problems, a multi-directional input operation device according to an aspect of the invention includes an operation member that can perform a tilting motion in response to a tilting operation by an operator; a support body that supports the operation member so that the tilting motion is allowed; position detecting means for detecting a plurality of positions including at least a pair of a first position and a second position where the operation member is positioned, in response to the tilting operation by the operator; a plurality of movable-side magnetic bodies that perform the tilting motion together with the operation member; a plurality of counter-side magnetic bodies arranged to respectively face and attract the plurality of movable-side magnetic bodies at the plurality of positions; a motor that causes the operation member to automatically perform a moving motion to at least one of the first position and the second position; a driving control unit that controls a driving force of the motor; and a coupling mechanism that transmits the driving force of the motor and can be selectively brought into contact with and separated from the operation member. When the moving motion of the operation member between the first position and the second position is performed by the operator, the driving control unit separates the coupling mechanism to the outside of a movable range of the operation member. When the moving motion of the operation member between the first position and the second position is automatically performed, the driving control unit brings the coupling mechanism into contact with the operation member to transmit the driving force so that the movable-side magnetic bodies are separated from the counter-side magnetic bodies.

With the multi-directional input operation device according to the aspect of the invention, the movable-side magnetic body and the counter-side magnetic body are detached from each other at a certain position, and the movable-side magnetic body and the counter-side magnetic body are attracted to each other at the next position. Accordingly, an operation sense (holding force) and a tactile feel (click feel) can be provided for the operator with respect to an operation in multiple directions. Also, the coupling mechanism that transmits the driving force of the motor to the operation member can be selectively brought into contact with and separated from the operation member. Accordingly, the operation member can be operated in multiple directions, and the operation member can be automatically moved between the first position and the second position at a desirable timing.

In the multi-directional input operation device according to the aspect of the invention, the operation member has a driven portion that performs the tilting motion in association with the operation member. The movable-side magnetic bodies and the counter-side magnetic bodies corresponding to the first position and the second position are provided at one surface side of the driven portion. The motor and the coupling mechanism are provided at the other surface side of the driven portion. The coupling mechanism contacts and is separated from the driven portion.

With this configuration, components relating to the moving mechanism of the operation member between the first position and the second position can be arranged with high space-utilization efficiency. Accordingly, the size of the multi-directional input operation device can be reduced.

Also, in the multi-directional input operation device according to the aspect of the invention, the driven portion may have a guide protrusion portion integrally provided with the driven portion. A guide groove portion may be provided, the guide groove portion corresponding to at least one of the first position and the second position, the guide protrusion portion being inserted into the guide groove portion when the protrusion portion may contact the guide groove portion, and the tilting motion of the operation member in the tilting direction may be restricted.

With this configuration, the tilting motion in the tilting direction of the operation member can be restricted without a complicated mechanism having another member. Therefore, a restriction mechanism with high space-utilization efficiency can be attained, and the size of the multi-directional input operation device can be further reduced.

Also, in the multi-directional input operation device according to the aspect of the invention, the coupling mechanism may include a gear member that is rotationally driven by the motor, and a cam member that is rotationally driven by the gear member.

With this configuration, the rotational force of the motor can be converted into the rotation motion of the cam member through the gear member, and the rotational force of the motor can be converted into a larger driving force according to the gear ratio and the cam curve of the cam member. Hence, a large driving force can be transmitted to the operation member even by using the motor with a small diameter, and the movable-side magnetic body and the counter-side magnetic body can be separated from each other. Therefore, a coupling mechanism with high space-utilization efficiency can be attained, and the size of the multi-directional input operation device can be further reduced.

Also, in the multi-directional input operation device according to the aspect of the invention, the cam member may have a standby cam surface and a driving cam surface having different distances from a rotation center of the cam member, and a rotation position detecting member that detects a rotation position of the cam member may be provided.

With this configuration, the coupling mechanism and the operation member can be separated by causing the standby cam surface to face the driven portion, and the driving force of the coupling mechanism can be transmitted to the operation member by causing the driving cam surface to contact the driven portion. Accordingly, the cam member and the driven portion can be desirably brought into contact with each other and separated from each other depending on the rotation position of the cam member. Accordingly, the operation member can be easily automatically moved at a desirable timing.

Also, in the multi-directional input operation device according to the aspect of the invention, one of a pair of the movable-side magnetic body and the counter-side magnetic body may be a permanent magnet. The permanent magnet may have a yolk that covers a portion of the permanent magnet other than a counter surface of the permanent magnet facing the other magnetic body.

With this configuration, a strong detachment force or a strong attraction force between the movable-side magnetic body and the counter-side magnetic body can be easily generated with a simple configuration. Accordingly, a strong operation sense and a tactile feel can be provided for the operator.

Also, a vehicle shift device according to another aspect of the invention includes the above-described multi-directional input operation device; a control unit that receives a signal from the multi-directional input operation device and transmits a signal to a vehicle-side device; and a shift knob that is engaged with the operation member of the multi-directional input operation device and is gripped by the operator.

With this configuration, the multi-directional input operation device that can perform an operation to each position can be preferably applied to a shift arrangement (shift pattern) of the vehicle shift device. Accordingly, a shift operation with a tactile feel can be provided in multiple directions, and the shift knob 60N can be automatically moved at a desirable timing.

The multi-directional input operation device according to the aspect of the invention can provide a strong operation sense and a tactile feel for the operator with respect to an operation in multiple directions by the operator. Also, the operation member can be automatically moved from the first position to the second position at a desirable timing.

The vehicle shift device according to the other aspect of the invention can preferably apply the multi-directional input operation device that can perform an operation in multiple directions, to a shift arrangement (shift pattern). The vehicle shift device can perform a shift operation in multiple directions with a tactile feel, and can automatically move the shift knob at a desirable timing.

### BRIEF DESCRIPTION OF THE DRAWINGS

Fig. 1 is a perspective view describing a vehicle shift device using a multi-directional input operation device according to a first embodiment of the invention;
Figs. 2A and 2B are illustrations describing the vehicle shift device using the multi-directional input operation device according to the first embodiment of the invention, Fig. 2A being a front view from the Y2 side shown in Fig. 1, Fig. 2B being a side view from the X1 side shown in Fig. 1;
Fig. 3 is an illustration describing the vehicle shift device using the multi-directional input operation device according to the first embodiment of the invention, Fig. 3 being a top view from the Z1 side shown in Fig. 1;
Fig. 4 is an exploded perspective view describing the vehicle shift device using the multi-directional input operation device according to the first embodiment of the invention;
Figs. 5A and 5B are illustrations specifically describing an operation of the vehicle shift device using the multi-directional input operation device according to the first embodiment of the invention, Fig. 5A being a plan view showing arrangement of a shift of a vehicle, Fig. 5B being a plan view showing a position of a shift knob;
Fig. 6 is a perspective view describing the multi-directional input operation device according to the first embodiment of the invention;
Fig. 7 is an exploded perspective view describing the multi-directional input operation device according to the first embodiment of the invention;
Figs. 8A and 8B are illustrations describing the multi-directional input operation device according to the first embodiment of the invention, Fig. 8A being a front view from the Y2 side shown in Fig. 6, Fig. 8B being a front view with a frame body in Fig. 8A omitted;
Figs. 9A and 9B are illustrations describing the multi-directional input operation device according to the first embodiment of the invention, Fig. 9A being a rear view from the Y1 side shown in Fig. 6, Fig. 9B being a rear view with the frame body in Fig. 9A omitted;
Figs. 10A and 10B are illustrations describing the multi-directional input operation device according to the first embodiment of the invention, Fig. 10A being a side view from the X1 side shown in Fig. 6, Fig. 10B being a side view with position detecting means and the frame body in Fig. 10A omitted;
Fig. 11 is an illustration describing the multi-directional input operation device according to the first embodiment of the invention, Fig. 11 being a perspective view showing portions of movable-side magnetic bodies and counter-side magnetic bodies;
Figs. 12A and 12B are illustrations describing the frame body of the multi-directional input operation device according to the first embodiment of the invention, Fig. 12A being a perspective view of the frame body, Fig. 12B being a top view of the frame body;
Figs. 13A and 13B are illustrations describing the frame body of the multi-directional input operation device according to the first embodiment of the invention, Fig. 13A being an enlarged plan view of a portion XIIIA shown in Fig. 12B, Fig. 13B being an enlarged plan view of a portion XIIIB shown in Fig. 12B;
Figs. 14A and 14B are bottom views showing portions of a motor and a coupling mechanism of the multi-directional input operation device according to the first embodiment of the invention;
Figs. 15A and 15B are rear views describing a motion in the multi-directional input operation device according to the first embodiment of the invention; Fig. 15A being an illustration of a first position state, Fig. 15B being an illustration of a second position state;
Figs. 16A to 16C are schematic illustrations describing a motion in the multi-directional input operation device according to the first embodiment of the invention, Fig. 16A being an illustration of a state at a reference position, Fig. 16B being an illustration of a tilting state in the Y1 direction, Fig. 16C being an illustration of a tilting state in the Y2 direction;
Fig. 17 is an illustration describing a modification of the multi-directional input operation device according to the first embodiment of the invention, Fig. 17 being a perspective view of a frame body according to a first modification;
Figs. 18A and 18B are illustrations describing modifications of the multi-directional input operation device according to the first embodiment of the invention, Fig. 18A being a side view of portions of movable-side magnetic bodies and counter-side magnetic bodies according to a second modification, Fig. 18B being a side view of portions of movable-side magnetic bodies and counter-side magnetic bodies according to a third modification; and
Figs. 19A and 19B are illustrations describing a gearshift device for an automobile according to related art, Fig. 19A being a perspective view of the gearshift device for the automobile, Fig. 19B being an exploded perspective view showing a basic configuration of the gearshift device.

### DESCRIPTION OF THE PREFERRED EMBODIMENTS

Embodiments of the invention are described below with reference to the drawings.

### First Embodiment

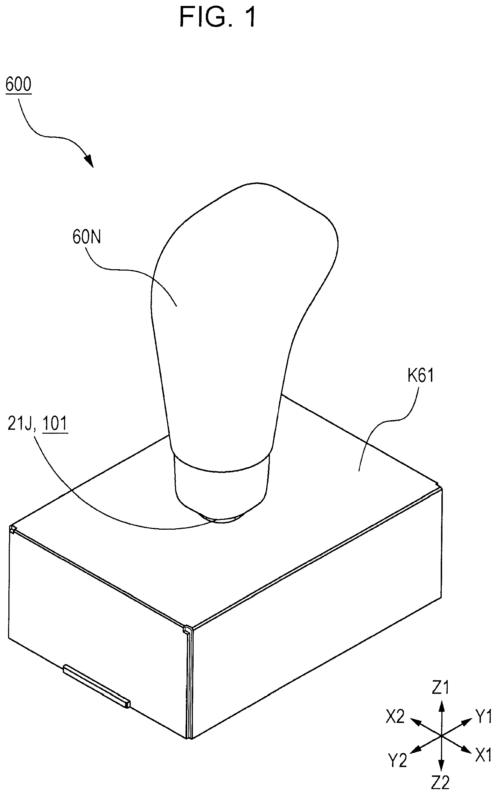

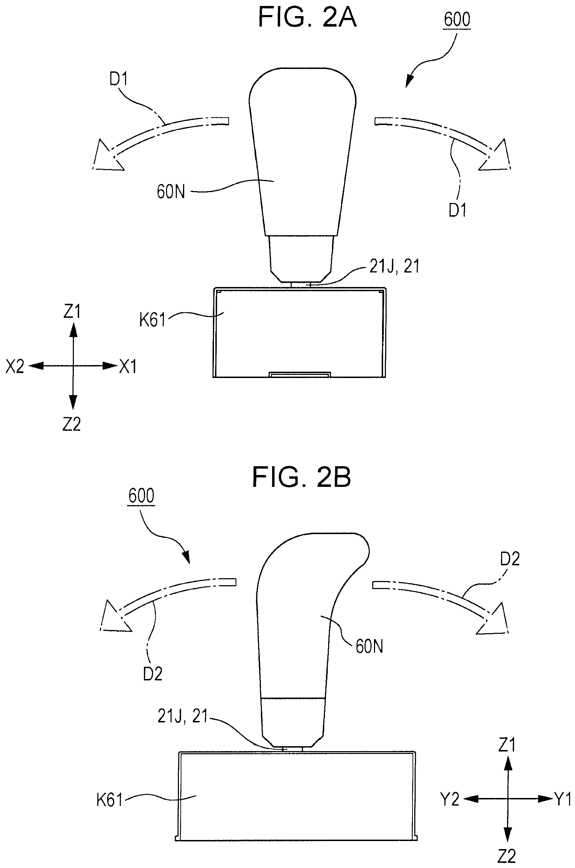

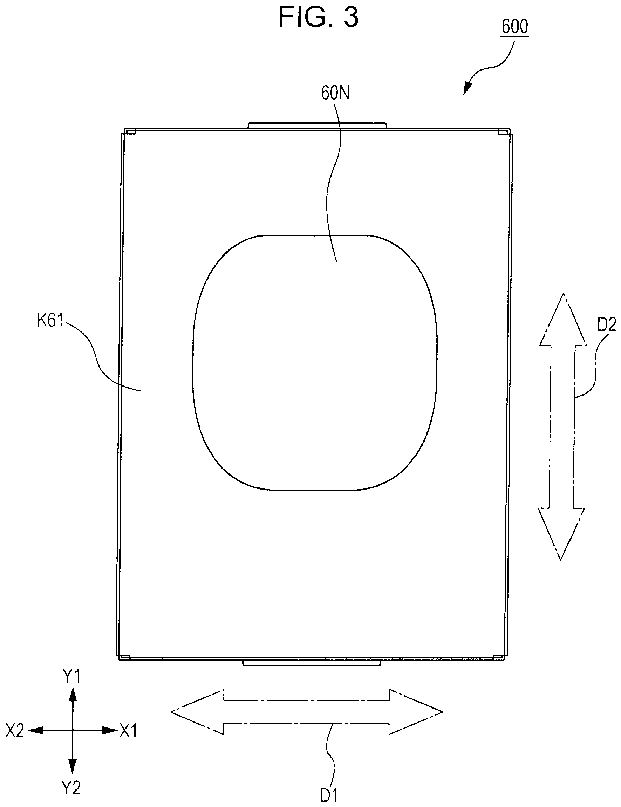

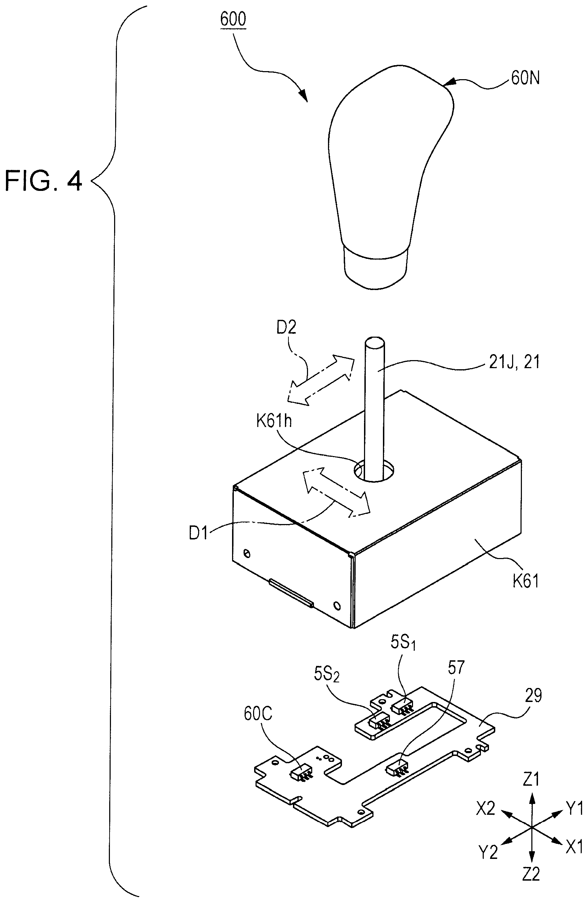

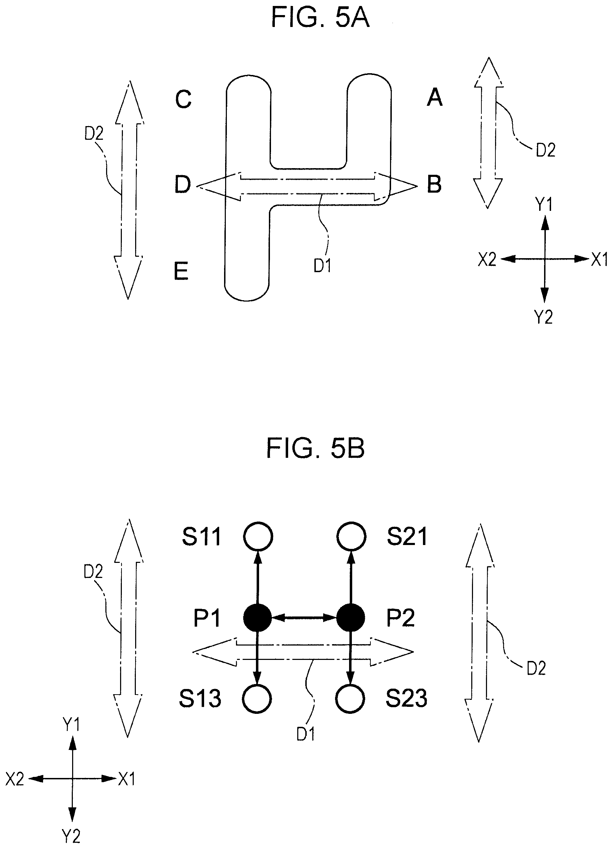

According to a first embodiment of the invention, a multi-directional input operation device 101 and a vehicle shift device 600 using the multi-directional input operation device 101 are described. First, the vehicle shift device 600 using the multi-directional input operation device 101 is described. Fig. 1 is a perspective view describing the vehicle shift device 600 using the multi-directional input operation device 101 according to the first embodiment of the invention. Figs. 2A and 2B are illustrations describing the vehicle shift device 600 using the multi-directional input operation device 101 according to the first embodiment of the invention, Fig. 2A being a front view from the Y2 side shown in Fig. 1, Fig. 2B being a side view from the X1 side shown in Fig. 1. Fig. 3 is an illustration describing the vehicle shift device 600 using the multi-directional input operation device 101 according to the first embodiment of the invention, Fig. 3 being a top view from the Z1 side shown in Fig. 1. Fig. 4 is an exploded perspective view describing the vehicle shift device 600 using the multi-directional input operation device 101 according to the first embodiment of the invention. Figs. 5A and 5B are illustrations specifically describing an operation of the vehicle shift device 600 using the multi-directional input operation device 101 according to the first embodiment of the invention, Fig. 5A being a plan view showing arrangement of a shift of a vehicle, Fig. 5B being a plan view showing a position of a shift knob 60N.

The vehicle shift device 600 using the multi-directional input operation device 101 according to the first embodiment of the invention has an external appearance as shown in Figs. 1 to 3, and, as shown in Fig. 4, includes the shift knob 60N that is gripped by an operator, the multi-directional input operation device 101 that can be operated in multiple directions in response to a tilting operation of the shift knob 60N by the operator, and a control unit 60C that transmits a signal to a vehicle-side device in response to a signal from the multi-directional input operation device 101. In addition, the vehicle shift device 600 includes a box-shaped case K61 arranged to cover the multi-directional input operation device 101, and a wiring board 29 housed in the multi-directional input operation device 101 and having the control unit 60C mounted thereon. The vehicle shift device 600 is mounted on a vehicle and is used for a shift operation of the vehicle. The shift operation can perform a tilting operation in a first direction D1 (X direction shown in Fig. 3) and a second direction D2 orthogonal to the first direction D1 (Y direction shown in Fig. 3).

As shown in Fig. 4, the shift knob 60N of the vehicle shift device 600 has a long and narrow shape so as to be easily gripped by the operator. Also, as shown in Figs. 1 to 3, the shift knob 60N is engaged and arranged so as to cover an operation shaft 21J of an operation member 21 of the multi-directional input operation device 101 shown in Fig. 4.

The control unit 60C of the vehicle shift device 600 is formed by using an integrated circuit (IC), and is mounted on the wiring board 29 housed in the multi-directional input operation device 101 as shown in Fig. 4. The control unit 60C is connected with the vehicle-side device through a connector (not shown), and transmits a position information signal indicative of the tilting operation of the shift knob 60N to the vehicle-side device. In response to this position information signal, the vehicle side provides a motion corresponding to a shift pattern, and displays a position of the shift knob 60N corresponding to the shift pattern on a display unit provided at an instrument panel or the like.

The case K61 of the vehicle shift device 600 is formed by bending a steel sheet. As shown in Fig. 4, the case K61 is formed in a box-like shape, has an opening K61h at the center, and is arranged to cover the multi-directional input operation device 101. At this time, as shown in Fig. 4, the operation shaft 21J of the operation member 21 of the multi-directional input operation device 101 penetrates through the opening K61h and is exposed from the case K61. In Fig. 4, since the multi-directional input operation device 101 is covered with the case K61, only the operation shaft 21J of the operation member 21 is illustrated.

The wiring board 29 of the vehicle shift device 600 uses a printed wiring board, and as shown in Fig. 4, the wiring board 29 has the control unit 60C mounted thereon as described above. Also, although not shown, the wiring board 29 is connected with a flexible printed board for electric connection with position detecting means 5S, and has a connector mounted thereon for connection with an external device. The wiring board 29 shown in Fig. 4 has mounted thereon a first signal processing unit 5S₁ and a second signal processing unit 5S₂ of the position detecting means 5S, together with the control unit 60C. The first signal processing unit 5S₁ and the second signal processing unit 5S₂ of the position detecting means 5S is described later in detail when the multi-directional input operation device 101 is described.

The vehicle shift device 600 configured as described above according to the first embodiment of the invention is applied to a vehicle of electronic control system, but not to a vehicle of mechanical control system with the shift knob 60N directly connected with a transmission. Hence, a shift operation of the vehicle is performed only by an information signal of a shift position transmitted from the multi-directional input operation device 101. The shift position of the vehicle is displayed on the display unit provided at the instrument panel or the like described above.

Now, a shift operation of the vehicle shift device 600 using the multi-directional input operation device 101 according to the first embodiment of the invention is described in detail with reference to Figs. 5A and 5B. Figs. 5A and 5B are illustrations specifically describing an operation of the vehicle shift device using the multi-directional input operation device according to the first embodiment of the invention, Fig. 5A being a plan view showing arrangement of a shift (shift pattern) of the vehicle, Fig. 5B being a plan view showing a position of the shift knob. The shift pattern shown in Fig. 5A varies depending on a vehicle to be applied, and hence is expressed by characters and numbers for convenience of description. The shift pattern is displayed on the display unit provided at the instrument panel or the like described above, or displayed on a top surface of the shift knob. Also, the position shown in Fig. 5B schematically illustrates a position when the shift knob (operation member) of the vehicle shift device 600 is operated and the operation member of the multi-directional input operation device 101 is moved.

For example, when the shift knob 60N is at a second position P2 of the operation member 21 shown in Fig. 5B and the shift position is at a shift "B" shown in Fig. 5A, if a tilting operation of the shift knob 60N is performed in the Y1 direction to an upstream position S21 shown in Fig. 5B, an information signal indicative of that the shift position has been moved to a shift "A" shown in Fig. 5A is transmitted to the vehicle side, and a shift operation of the vehicle is performed. The operator releases the hand from the shift knob 60N because the operator has completed the operation, and the shift knob 60N is automatically returned to the second position P2.

Also, in a later operation, if the tilting operation of the shift knob 60N at the second position P2 is performed in the Y2 direction to a downstream position S23 shown in Fig. 5B, the shift position at the shift "A" is moved to the shift "B" shown in Fig. 5A. In response to this operation, an information signal indicative of that the shift position has been moved to the shift "B" shown in Fig. 5A is transmitted to the vehicle side, and a shift operation of the vehicle is performed. The operator releases the hand from the shift knob 60N because the operator has completed the operation, and the shift knob 60N is automatically returned to the second position P2.

In this way, in the vehicle shift device 600, the shift "A" or the shift "B" is allocated to the second position P2 serving as a reference position of the operation member 21 of the multi-directional input operation device 101, and is used for the operations including the shift "A" and the shift "B." At this time, as described above, to switch the shift from the shift "B" to the shift "A," the operation member 21 of the multi-directional input operation device 101 can perform the tilting operation in the Y1 direction from the second position P2 to the upstream position S21 shown in Fig. 5B. Similarly, to switch the shift from the shift "A" to the shift "B," the operation member 21 of the multi-directional input operation device 101 can performed the tilting operation the Y2 direction from the second position P2 to the downstream position S23. A moving direction in the Y direction of the operation member 21 of the multi-directional input operation device 101, that is, a direction in which the tilting operation is performed is allocated to the second direction D2 of the shift operation of the vehicle.

Meanwhile, for example, when the shift position is at the shift "B" shown in Fig. 5A, if the tilting operation of the shift knob 60N at the second position P2 is performed in the X2 direction to a first position P1 of the operation member 21 shown in Fig. 5B, the shift position at the shift "B" is moved to a shift "D" shown in Fig. 5A. At this time, even if the operator releases the hand from the shift knob 60N, the operation member 21 (shift knob 60N) stays at the first position P1 and holds the tilting state of the operation member 21.

Also, after the operation, when the shift position is at the shift "D," if the tilting operation of the shift knob 60N at the first position P1 is performed in the Y1 direction to a front position S11 shown in Fig. 5B, an information signal indicative of that the shift position has been moved to a shift "C" shown in Fig. 5A is transmitted to the vehicle side, and a shift operation of the vehicle is performed. Then, when the operator releases the hand from the shift knob 60N, the shift knob 60N is automatically returned to the first position P1.

Also, when the shift position is at the shift "D," if the tilting operation of the shift knob 60N at the first position P1 is performed in the Y2 direction to a rear position S13 shown in Fig. 5B, an information signal indicative of that the shift position has been moved to a shift "E" shown in Fig. 5A is transmitted to the vehicle side, and a shift operation of the vehicle is performed. Then, when the operator releases the hand from the shift knob 60N, the shift knob 60N is automatically returned to the first position P1.

Also, similarly, to move the shift position from the shift "C" to the shift "D," the tilting operation of the shift knob 60N is performed in the Y2 direction from the first position P1 to the rear position S13, and to move the shift position from the shift "E" to the shift "D," the tilting operation of the shift knob 60N is performed in the Y1 direction from the first position P1 to the front position S11.

In this way, in the vehicle shift device 600, the shift "D" is allocated to the first position P1 serving as a reference position of the operation member 21 of the multi-directional input operation device 101, and is used for the operations including the shift "C" and the shift "E." A moving direction in the X direction in which the operation member 21 of the multi-directional input operation device 101 is moved between the first position P1 and the second position P2, that is a tilting direction is allocated to the first direction D1 of the shift operation of the vehicle. Also, Figs. 2A to 4 illustrate the first direction D1 and the second direction D2 of the tilting operation for easier understanding of the description.

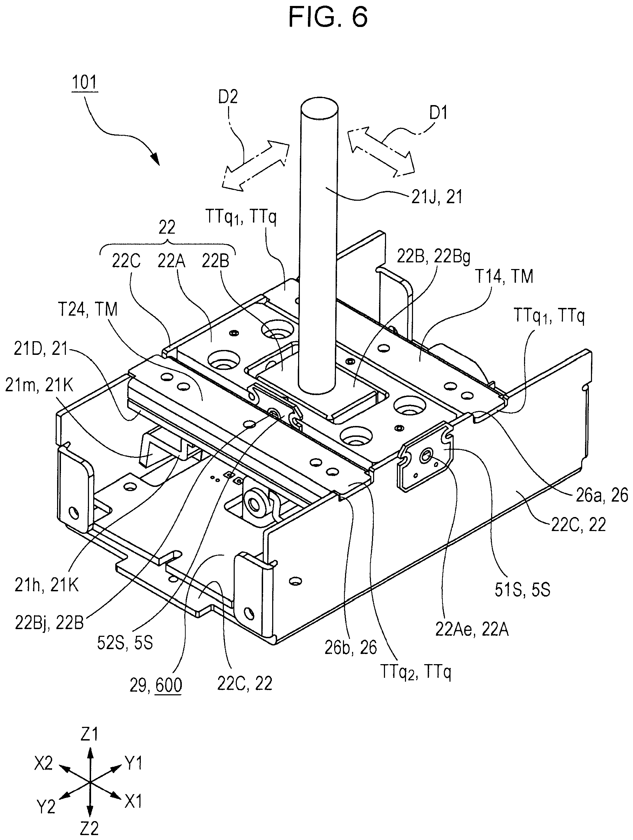

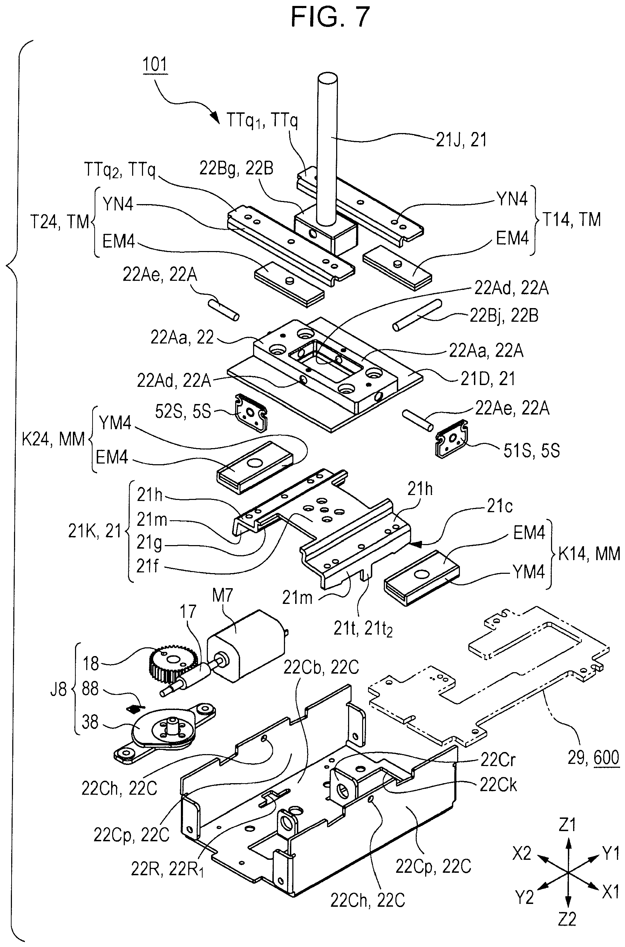

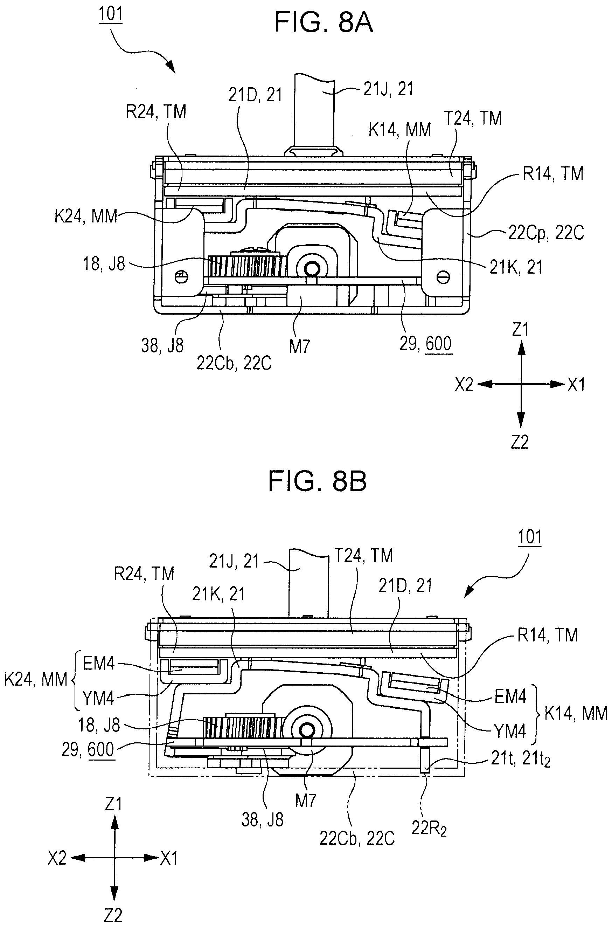

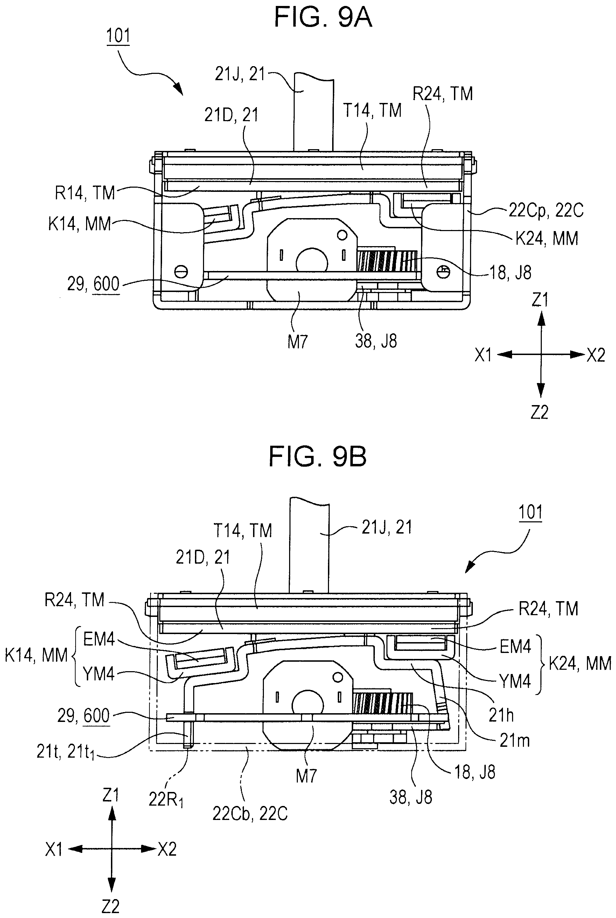

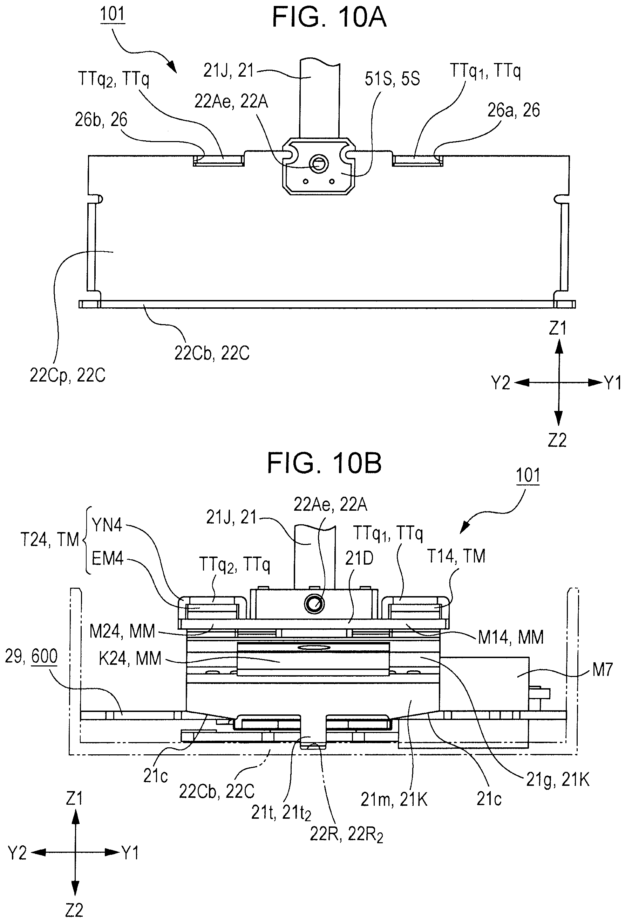

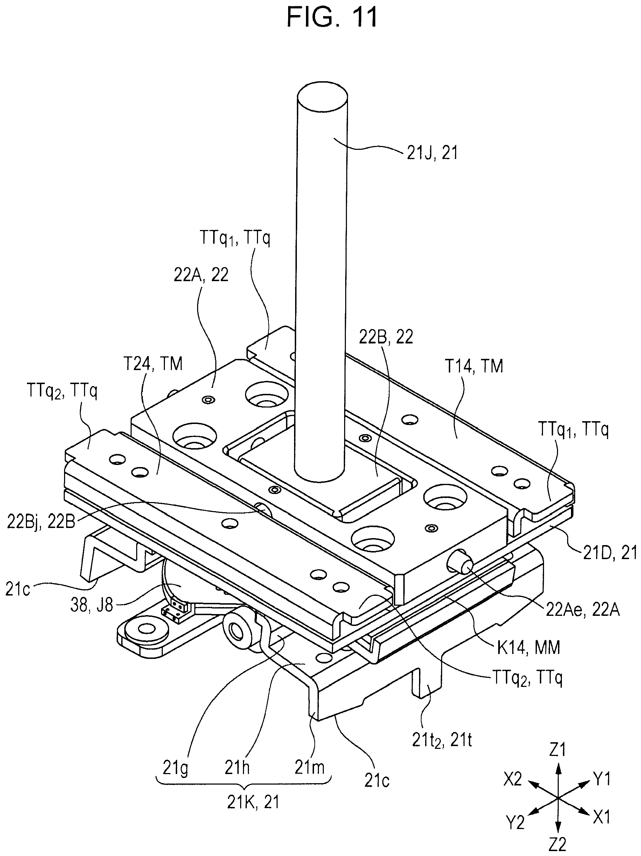

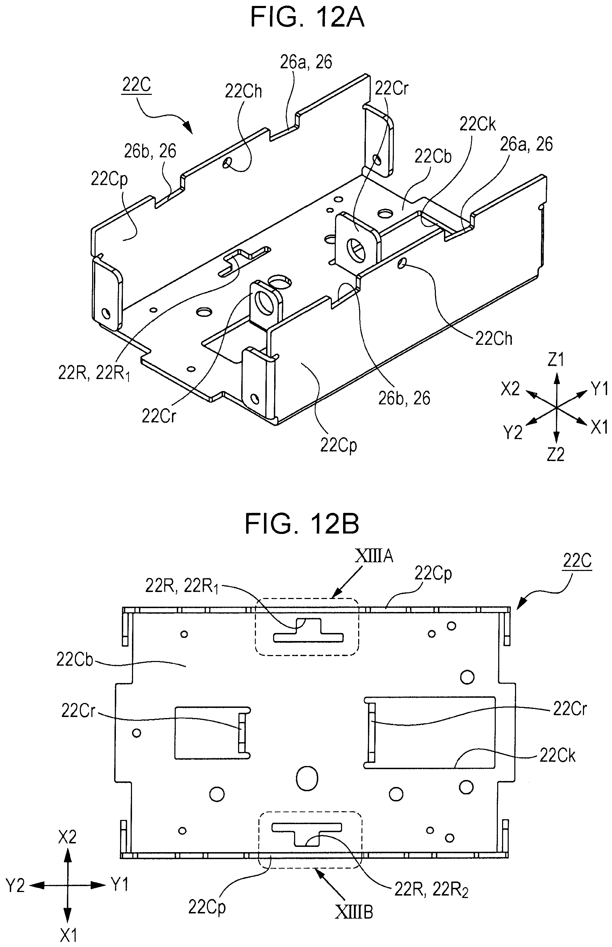

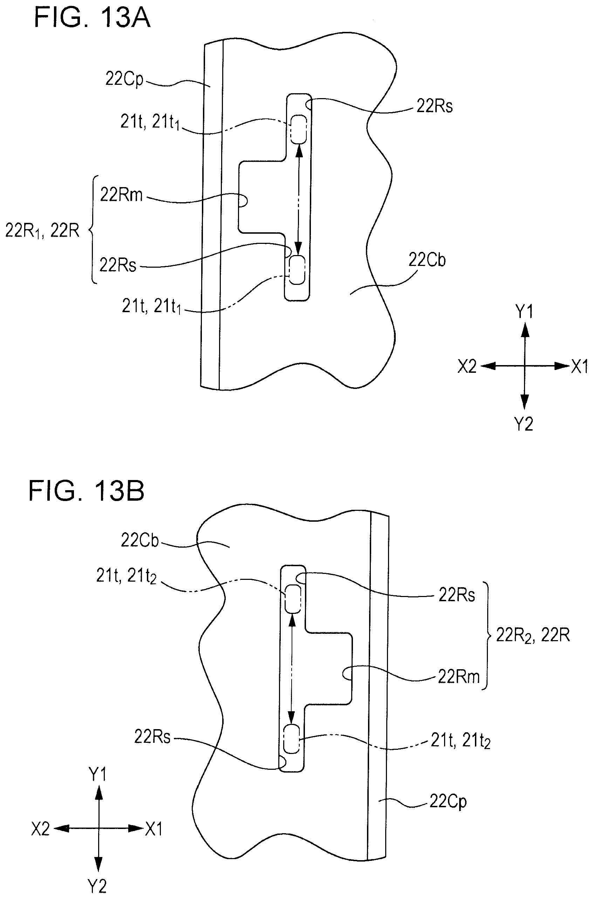

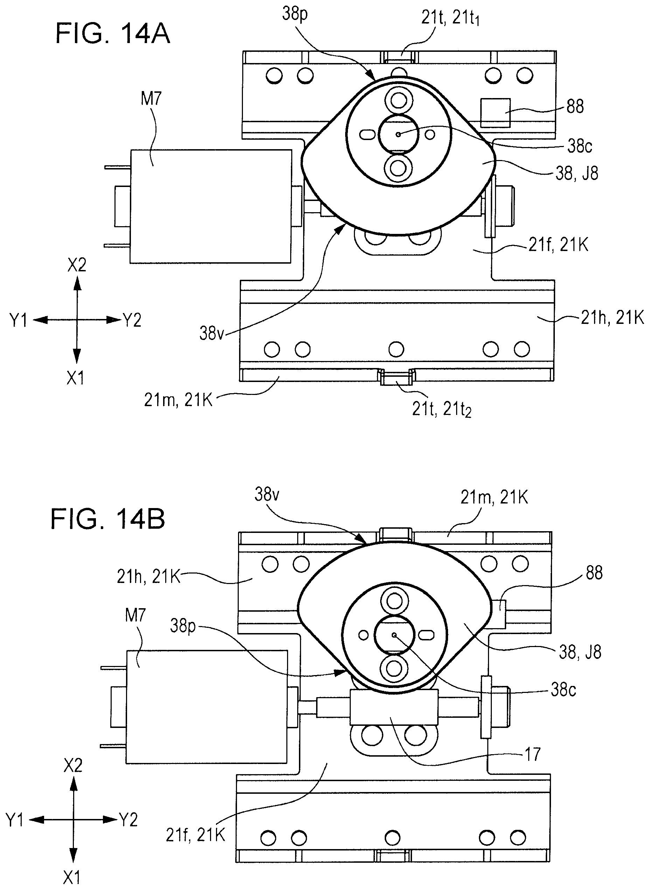

Next, the multi-directional input operation device 101 is described. Fig. 6 is a perspective view describing the multi-directional input operation device 101 according to the first embodiment of the invention. Fig. 7 is an exploded perspective view describing the multi-directional input operation device 101 according to the first embodiment of the invention. Figs. 8A and 8B are illustrations describing the multi-directional input operation device 101 according to the first embodiment of the invention, Fig. 8A being a front view from the Y2 side shown in Fig. 6, Fig. 8B being a front view with a frame body 22C in Fig. 8A omitted. Figs. 9A and 9B are illustrations describing the multi-directional input operation device 101 according to the first embodiment of the invention, Fig. 9A being a rear view from the Y1 side shown in Fig. 6, Fig. 9B being a rear view with the frame body 22C in Fig. 9A omitted. Figs. 8A, 8B, 9A, and 9B show a state that the operation member 21 is at the second position P2. Figs. 10A and 10B are illustrations describing the multi-directional input operation device 101 according to the first embodiment of the invention, Fig. 10A being a side view from the X1 side shown in Fig. 6, Fig. 10B being a side view with the position detecting means 5S (51S) and the frame body 22C in Fig. 10A omitted. Fig. 11 is an illustration describing the multi-directional input operation device according to the first embodiment of the invention, Fig. 11 being a perspective view showing portions of movable-side magnetic bodies MM and counter-side magnetic bodies TM. Figs. 12A and 12B are illustrations describing the frame body 22C of the multi-directional input operation device according to the first embodiment of the invention, Fig. 12A being a perspective view of the frame body 22C, Fig. 12B being a top view of the frame body 22C. Figs. 13A and 13B are illustrations describing the frame body 22C of the multi-directional input operation device according to the first embodiment of the invention, Fig. 13A being an enlarged plan view of a portion XIIIA shown in Fig. 12B, Fig. 13B being an enlarged plan view of a portion XIIIB shown in Fig. 12B. Figs. 13A and 13B each schematically illustrate an aspect that a guide protrusion portion 21t (21t₁, 21t₂) moves in a guide groove portion 22R (22R₁, 22R₂). Figs. 14A and 14B are bottom views showing portions of a motor M7 and a coupling mechanism J8 of the multi-directional input operation device according to the first embodiment of the invention. In Figs. 14A and 14B, the wiring board 29 is omitted for easier understanding of the description.

The multi-directional input operation device 101 according to the first embodiment of the invention has an external appearance as shown in Fig. 6. As shown in Figs. 7 to 9B, the multi-directional input operation device 101 includes the operation member 21 that can perform a tilting motion in response to an operation by the operator, a support body 22 that supports the operation member 21 so that the tilting motion is allowed, the position detecting means 5S that detects a plurality of positions where the operation member 21 is positioned in response to the tilting operation, a plurality of movable-side magnetic bodies MM that perform a tilting motion together with the operation member 21, a plurality of counter-side magnetic bodies TM arranged to respectively face the plurality of movable-side magnetic bodies MM, the motor M7 that causes the operation member 21 to automatically perform a moving operation, a driving control unit 57 (see Fig. 4) that controls a driving force of the motor M7, and the coupling mechanism J8 that transmits the driving force of the motor M7 and can be selectively brought into contact with and separated from the operation member 21. The multi-directional input operation device 101 can be operated in multiple directions including a tilting motion in the first direction D1 (Y1 direction and Y2 direction shown in Figs. 6 and 8B) in which the operation member 21 moves between the first position P1 and the second position P2 (see Fig. 5B), and a tilting motion in the second direction D2 orthogonal to the first direction D1 (Y1 direction and Y2 direction shown in Figs. 6 and 10B).

First, as shown in Figs. 7, 8A, 8B, 9A, 9B, and 11, the operation member 21 of the multi-directional input operation device 101 includes the columnar operation shaft 21J that is engaged with the support body 22 and extends in the vertical direction (Z direction in Fig. 7), a driven portion 21K that is engaged with the support body 22 and performs a tilting motion in association with the operation member 21, and a base member 21D that is engaged with the support body 22 and performs a tilting motion in association with the operation member 21. As described above, the shift knob 60N of the vehicle shift device 600 is arranged to cover the operation shaft 21J of the operation member 21.

The driven portion 21K of the operation member 21 is formed by being a steel sheet. As shown in Fig. 7, the driven portion 21K includes a first flat plate portion 21f that is engaged with the support body 22 (specifically, second association member 22B, described later) and has a flat plate-like shape, coupling portions 21g extending downward (Z2 direction in Figs. 8A and 8B) from both end portions in one direction (first direction D1 when assembled) of the first flat plate portion 21f, two second flat plate portions 21h provided continuously to the coupling portions 21g and being parallel to the first flat plate portions 21f, and downward extending portions 21m extending downward (Z2 direction in Figs. 8A and 8B) from end portions of the second flat plate portions 21h opposite to the coupling portions 21g. The driven portion 21K performs the tilting motion in association with the tilting motion of the operation shaft 21J in the first direction D1 (tilting direction, or X direction shown in Fig. 7). As described above, the tilting motion in this first direction D1 allows the operation member 21 of the multi-directional input operation device 101 to be positioned at the first position P1 and the second position P2.

Also, the protruding guide protrusion portions 21t (21t₁, 21t₂) are respectively provided by one each at lower sides of the downward extending portions 21m at both sides of the driven portion 21K. The guide protrusion portions 21t (21t₁, 21t₂) are continuous to and integral with the downward extending portions 21m.

The base member 21D of the operation member 21 is made of a soft magnetic material such as iron. As shown in Figs. 7, 8A, 8B, 9A, 9B, and 10B, the base member 21D has a flat surface shape extending in plan. The axis center of the operation shaft 21J penetrates through the base member 21D. Also, the base member 21D is engaged with the support body 22 (specifically, first association member 22A, described later), and is arranged between the operation shaft 21J and the driven portion 21K. The base member 21D performs the tilting motion in association with the tilting motion of the operation shaft 21J in the second direction D2 (Y direction shown in Figs. 10A and 10B). The driven portion 21K also performs the tilting motion in association with the tilting motion in the second direction D2.

Also, in the first embodiment of the invention, since the base member 21D is made of a soft magnetic material, the counter-side magnetic body TM shown in Fig. 8B and the movable-side magnetic body MM shown in Fig. 10B are formed by the base member 21D. The counter-side magnetic body TM and the movable-side magnetic body MM will be described later when the description thereof is given.

As shown in Figs. 6 and 7, the support body 22 of the multi-directional input operation device 101 includes the first association member 22A that is rotated in accordance with the tilting operation of the operation member 21 (operation shaft 21J), the second association member 22B that is rotated in accordance with the tilting operation of the operation member 21 and has an axial direction orthogonal to the axial direction of the first association member 22A, and the frame body 22C that supports the first association member 22A.

The first association member 22A of the support body 22 is formed by molding a synthetic resin material. As shown in Fig. 7, the first association member 22A includes an external wall portion 22Aa formed in a rectangular cylinder, and a pair of first tilting shafts 22Ae penetrating through a pair of opposite surfaces of the external wall portion 22Aa. When the multi-directional input operation device 101 is assembled, the first tilting shafts 22Ae are inserted into holes 22Ch provided in a pair of opposite side wall portions 22Cp of the frame body 22C, and are rotatably supported by the frame body 22C. Accordingly, the first association member 22A can rotate around the first tilting shafts 22Ae as the rotation center.

Also, the first association member 22A is engaged with the base member 21D. Hence, the base member 21D can rotate around the first tilting shafts 22Ae as the rotation center by the rotation motion of the first association member 22A. Accordingly, as described above, the base member 21D also performs the tilting motion in association with the tilting motion of the operation shaft 21J in the second direction D2 (Y direction shown in Figs. 10A and 10B).

The second association member 22B of the support body 22 is formed by molding a synthetic resin material. As shown in Fig. 7, the second association member 22B includes a block-shaped base portion 22Bg, and a second tilting shaft 22Bj arranged to penetrate through side walls of the base portion 22Bg. When the multi-directional input operation device 101 is assembled, the second association member 22B is inserted into a space surrounded by the external wall portion 22Aa of the first association member 22A, the second tilting shaft 22Bj is inserted into a pair of holes 22Ad of the external wall portion 22Aa (see Fig. 11), and hence the second association member 22B is rotatably supported by the first association member 22A. Accordingly, the second association member 22B can rotate around the second tilting shaft 22Bj as the rotation center. The axial direction of the second tilting shaft 22Bj is orthogonal to the axial direction of the first tilting shafts 22Ae.

Also, the second association member 22B is engaged with the first flat plate portion 21f of the driven portion 21K. Hence, the driven portion 21K can rotate around the second tilting shaft 22Bj as the rotation center by the rotation motion of the second association member 22B. Also, the operation shaft 21J of the operation member 21 is inserted into and engaged with the second association member 22B. With the above-described configuration, the driven portion 21K performs the tilting motion in association with the tilting motion of the operation shaft 21J in the first direction D1 (tilting direction, or X direction shown in Figs. 8A and 8B).

As described above, the operation shaft 21J (operation member 21) is supported so that the tilting motion is allowed, by using the first association member 22A, the second association member 22B, and the frame body 22C included in the support body 22. The operation shaft 21J can perform the tilting motion in the first direction D1 around the second tilting shaft 22Bj of the second association member 22B as the rotation axis, and the operation shaft 21J can perform the tilting motion in the second direction D2 around the first tilting shafts 22Ae of the first association member 22A as the rotation axis.

The frame body 22C of the support body 22 is formed by bending a steel sheet. As shown in Figs. 7, 12A, and 12B, the frame body 22C is mainly formed of a bottom plate portion 22Cb and the pair of side wall portions 22Cp, in a U-like shape with the upper side being open.

As shown in Fig. 12B, the bottom plate portion 22Cb of the frame body 22C has the two guide groove portions 22R (22R₁, 22R₂) in portions along the first tilting shaft 22Ae in top view (see Fig. 11). When the tilting operation is performed on the operation member 21 to the first position P1, the guide protrusion portion 21t₁ is inserted into the one guide groove portion 22R₁, and when the tilting operation is performed on the operation member 21 to the second position P2, the guide protrusion portion 21t₂ is inserted into the other guide groove portion 22R₂.

Also, as shown in Figs. 13A and 13B, the guide groove portion 22R (22R₁, 22R₂) is formed by combining a groove portion 22Rm that allows the guide protrusion portion 21t (21t₁, 21t₂) to move in the X direction (first direction D1) when the guide protrusion portion 21t (21t₁, 21t₂) is inserted, and a slit portion 22Rs that allows the guide protrusion portion 21t (21t₁, 21t₂) to move in the Y direction (second direction D2) when the guide protrusion portion 21t (21t₁, 21t₂) is inserted.

Also, as shown in Figs. 7, 12A, and 12B, the bottom plate portion 22Cb has two ribs 22Cr that fix the motor M7, and an opening 22Ck, a lower portion of the motor M7 being arranged in the opening 22Ck.

As shown in Figs. 7, 12A, and 12B, the side wall portions 22Cp of the frame body 22C respectively have the holes 22Ch at mutually facing positions. As described above, the first tilting shafts 22Ae are inserted into the holes 22Ch, and rotatably support the first association member 22A. Also, as shown in Fig. 12A, stopper portions 26 (26a, 26b) (described later) are provided at end portions of the side wall portions 22Cp.

The position detecting means 5S of the multi-directional input operation device 101 has a function of detecting a plurality of positions where the operation member 21 is positioned. The position detecting means 5S includes first position detecting means 51S and second position detecting means 52S. As shown in Fig. 6, the first position detecting means 51S is engaged with the first tilting shaft 22Ae of the first association member 22A, and the second position detecting means 52S is engaged with the second tilting shaft 22Bj of the second association member 22B. Also, the position detecting means 5S (first position detecting means 51S and second position detecting means 52S) uses a rotational variable resistor including a substrate having a resistance pattern formed thereon, and a slide terminal that slides on the resistance pattern.

Also, the first signal processing unit 5S₁ that processes a signal from the first position detecting means 51S is connected to the first position detecting means 51S by a flexible printed board (not shown). The first position detecting means 51S detects the rotation angle of the first tilting shafts 22Ae, and the first signal processing unit 5S₁ (see Fig. 4) mounted on the wiring board 29 detects movement in the second direction D2 of the operation member 21 from this rotation angle. Accordingly, the positions of the single pair of front position S11 and rear position S13 and the single pair of upstream position S21 and downstream position S23 can be detected.

Also, the second signal processing unit 5S₂ that processes a signal from the second position detecting means 52S is connected to the second position detecting means 52S. The second position detecting means 52S detects the rotation angle of the second tilting shaft 22Bj, and the second signal processing unit 5S₂ (see Fig. 4) mounted on the wiring board 29 detects movement of the operation member 21 from this rotation angle in the first direction D1. Accordingly, the above-described single pair of the first position P1 and the second position P2 can be detected. In the first embodiment of the invention, the first position detecting means 51S and the second position detecting means 52S each use the rotational variable resistor; however, it is not limited thereto. For example, a permanent magnet and a magnetism detecting element may be combined and serve as position detecting means.

As described above, the multi-directional input operation device 101 has a magnetic mechanism formed by combining the plurality of movable-side magnetic bodies MM that perform the tilting motion together with the operation member 21, and the plurality of counter-side magnetic bodies TM arranged to respectively face the plurality of movable-side magnetic bodies MM. To be specific, as shown in Fig. 8B, a magnetic mechanism is a combination of a first tilting magnet K14 and a second tilting magnet K24 of the movable-side magnetic bodies MM, and the base member 21D that functions as the counter-side magnetic body TM. As shown in Fig. 10B, another magnetic mechanism is a combination of the base member 21D that functions as the movable-side magnetic body MM, and a first counter magnet T14 and a second counter magnet T24 of the counter-side magnetic bodies TM.

As shown in Figs. 7, 8B, and 9B, the first tilting magnet K14 and the second tilting magnet K24 of the movable-side magnetic bodies MM are each formed of a permanent magnet EM4 and a yoke YM4 arranged to surround three surfaces of the permanent magnet EM4. Accordingly, a strong detachment force or a strong attraction force between the movable-side magnetic body MM and the counter-side magnetic body TM can be easily generated with a simple configuration. As shown in Figs. 8B and 9B, the first tilting magnet K14 and the second tilting magnet K24 are arranged at both sides of the second tilting shaft 22Bj and fixed to the driven portion 21K of the operation member 21, and perform the tilting motion in mutually opposite directions in association with the tilting motion of the operation member 21 in the first direction D1.

Also, when the operation member 21 moves to the first position P1, the first tilting magnet K14 contacts or approaches the base member 21D of the soft magnetic body. When the operation member 21 moves to the second position P2 (state in Fig. 8B), the second tilting magnet K24 contacts or approaches the base member 21D. The first tilting magnet K14 and the second tilting magnet K24 are each arranged in a posture that a portion of the permanent magnet EM4 other than a counter surface of the permanent magnet EM4 facing the base member 21D is covered with the yoke YM4.

As shown in Figs. 8B and 9B, the base member 21D that functions as the counter-side magnetic body TM is formed such that a portion thereof facing the first tilting magnet K14 serves as a first fixed magnetic body R14, and a portion thereof facing the second tilting magnet K24 serves as a second fixed magnetic body R24. The first fixed magnetic body R14 and the second fixed magnetic body R24 are arranged with the second tilting shaft 22Bj interposed therebetween. As described above, when the operation member 21 moves to the first position P1, the first tilting magnet K14 contacts or approaches the first fixed magnetic body R14. When the operation member 21 moves to the second position P2 (state in Fig. 8B), the second tilting magnet K24 contacts or approaches the second fixed magnetic body R24. In the first embodiment of the invention, the base member 21D of the soft magnetic body is preferably used as the first fixed magnetic body R14 and the second fixed magnetic body R24; however, it is not limited thereto. For example, the permanent magnet EM4 (and additionally yoke YM4) may serve as a counter-side magnetic body TM. Accordingly, a further strong attractive force can be generated.

Also, as shown in Figs. 8B and 9B, the movable-side magnetic body MM (first tilting magnet K14 and second tilting magnet K24) and the counter-side magnetic body TM (first fixed magnetic body R14 and second fixed magnetic body R24) configured as described above are all arranged at one surface side (Z1 direction side shown in Figs. 8A and 8B) of the driven portion 21K.

Meanwhile, as shown in Fig. 10B, the base member 21D that functions as the movable-side magnetic body MM and included in the other magnetic mechanism is configured such that a portion facing the first counter magnet T14 serves as a first movable magnetic body M14 and a portion facing the second counter magnet T24 serves as a second movable magnetic body M24. The first movable magnetic body M14 and the second movable magnetic body M24 are arranged with the first tilting shafts 22Ae interposed therebetween, and perform the tilting motion in association with the tilting motion of the operation member 21 in the second direction D2. In the first embodiment of the invention, the pair of movable-side magnetic bodies MM with the first tilting shafts 22Ae interposed therebetween is used; however, it is not limited thereto.

Also, the first counter magnet T14 and the second counter magnet T24 of the counter-side magnetic bodies TM included in the other magnetic mechanism are each formed of a permanent magnet EM4 and a yoke YN4 arranged to surround three surfaces of the permanent magnet EM4 as shown in Figs. 7 and 10B, similarly to the first tilting magnet K14 and the second tilting magnet K24. Accordingly, a strong detachment force or a strong attraction force between the movable-side magnetic body MM and the counter-side magnetic body TM can be easily generated with a simple configuration. As shown in Fig. 10B, the first counter magnet T14 and the second counter magnet T24 are arranged at the base member 21D of the operation member 21 with the first tilting shafts 22Ae interposed therebetween, and perform the tilting motion in mutually opposite directions in association with the tilting motion of the operation member 21 in the second direction D2. The first counter magnet T14 and the second counter magnet T24 are each arranged in a posture that a portion of the counter-side magnetic body TM other than a counter surface of the permanent magnet EM4 facing the base member 21D is covered with the yoke YN4.

Also, as shown in Fig. 10B, the movable-side magnetic body MM (first movable magnetic body M14 and second movable magnetic body M24) and the counter-side magnetic body TM (first counter magnet T14 and second counter magnet T24) configured as described above are all arranged at one surface side (Z1 direction side shown in Figs. 10A and 10B) of the driven portion 21K.

Also, as shown in Fig. 11, a protrusion portion extending in the longitudinal direction (X direction in Fig. 11) of the yoke YN4 is provided at the yoke YN4 of each of the first counter magnet T14 and the second counter magnet T24. This protrusion portion serves as a contact portion TTq that contacts the stopper portion 26 (described later) when the operation member 21 is tilted. In particular, contact portions TTq₁ are provided at both sides of the first counter magnet T14, and contact portions TTq₂ are provided at both sides of the second counter magnet T24.

Describing the stopper portions 26 of the multi-directional input operation device 101, as shown in Figs. 10A and 12A, two stopper portions (stopper portion 26a and stopper portion 26b) are provided at each of the pair of side wall portions 22Cp of the frame body 22C of the support body 22. Regarding the stopper portions 26, the stopper portions 26a are arranged at a side where the operation member 21 performs the tilting motion in the Y1 direction, and the stopper portions 26b are arranged at a side where the operation member 21 performs the tilting motion in the Y2 direction, with respect to the first tilting shafts 22Ae. When the operation member 21 is at the reference position (first position P1 or second position P2), as shown in Fig. 10A, the stopper portion 26a faces the contact portion TTq₁ of the first counter magnet T14, and the stopper portion 26b faces the contact portion TTq₂ of the second counter magnet T24.

Although described later in detail when the motion is described, the stopper portion 26 is provided to correspond to each of the plurality of positions where the operation member 21 is positioned in response to the tilting operation from the reference position by the operator. That is, the stopper portions 26a are provided to correspond to the front position S11 and the upstream position S21 shown in Fig. 5B, and the stopper portions 26b are provided to correspond to the rear position S13 and the downstream position S23 shown in Fig. 5B.

The motor M7 of the multi-directional input operation device 101 has a function of generating a driving force for causing the operation member 21 to automatically perform the moving motion. As shown in Figs. 8A, 8B, 9A and 9B, the motor M7 is fixed to the bottom plate portion 22Cb of the frame body 22C at the other surface side (Z2 direction side shown in Figs. 8A and 8B) of the driven portion 21K. The small motor M7 preferably uses, for example, a typical DC motor.

Next, the driving control unit 57 of the multi-directional input operation device 101 has a function of controlling the driving force of the motor M7, and uses an integrated circuit (IC). The driving control unit 57 is connected with the motor M7 by a flexible printed board (not shown), and is mounted on the wiring board 29 as shown in Fig. 4.

The coupling mechanism J8 of the multi-directional input operation device 101 has a function of transmitting the driving force of the motor M7 to the driven portion 21K of the operation member 21. As shown in Fig. 7, the coupling mechanism J8 includes a gear member 18 that is rotationally driven by the motor M7, a cam member 38 that is rotationally driven by the gear member 18, and a rotation position detecting member 88 that detects a rotation position of the cam member 38. As shown in Figs. 8A, 8B, 9A, and 9B, the coupling mechanism J8 is arranged at the other surface side (Z2 direction side shown in Figs. 8A and 8B) of the driven portion 21K. Accordingly, all the movable-side magnetic bodies MM and the counter-side magnetic bodies TM are arranged at the one surface side of the driven portion 21K, and the motor M7 and the coupling mechanism J8 are arranged at the other surface side of the driven portion 21K. Owing to this, components relating to the moving mechanism of the operation member 21 between the first position P1 and the second position P2 can be arranged with high space-utilization efficiency. Accordingly, the size of the multi-directional input operation device 101 can be reduced.

The gear member 18 of the coupling mechanism J8 has a gear-like shape as shown in Fig. 7, is meshed with a worm 17 associated with the rotation axis of the motor M7, and takes the rotation of the motor M7 in a direction at 90°. The gear member 18 is engaged with the cam member 38, and transmits the rotation of the motor M7 with a certain gear ratio to the cam member 38.

As shown in Figs. 14A and 14B, the cam member 38 of the coupling mechanism J8 has a cam shape having a standby cam surface 38p and a driving cam surface 38v with different distances from a rotation center 38c of the cam member 38. When the operation member 21 is at the first position P1, as shown in Fig. 14A, the standby cam surface 38p faces an inner side surface of the driven portion 21K, and the cam member 38 is separated to the outside of a movable range of the operation member 21. Also, when the operation member 21 is automatically moved from the first position P1 to the second position P2, the motor M7 is driven to rotate the cam member 38, the driving cam surface 38v is brought into contact with an inner side surface of the downward extending portion 21m of the driven portion 21K as shown in Fig. 14B, and hence the driven portion 21K is tilted to the second position P2. Accordingly, the movable-side magnetic body MM (first tilting magnet K14) and the counter-side magnetic body TM (first fixed magnetic body R14) attracted at the first position P1 are separated from each other. The driving control unit 57 executes the above-described control that allows the cam member 38 of the coupling mechanism J8 to be selectively brought into contact with and separated from the driven portion 21K of the operation member 21.

In this way, the rotational force of the motor M7 can be converted into the rotation motion of the cam member 38 through the gear member 18, and the rotational force of the motor M7 can be converted into a larger driving force according to the gear ratio and the cam curve of the cam member 38. Hence, a large driving force can be transmitted to the operation member 21 even by using the motor M7 with a small diameter, and the movable-side magnetic body MM and the counter-side magnetic body TM can be separated from each other. Therefore, the coupling mechanism J8 with high space-utilization efficiency can be attained, and the size of the multi-directional input operation device 101 can be further reduced.

The rotation position detecting member 88 of the coupling mechanism J8 uses a photoreflector, is arranged between the wiring board 29 and the cam member 38, and detects the rotation position of the cam member 38. That is, when the cam member 38 is separated to the outside of the movable range of the operation member 21 as shown in Fig. 14A, the rotation position detecting member 88 does not detect the cam member 38. Hence, the driving control unit 57 determines that the cam member 38 is at a retraction position. When the driving cam surface 38v contacts the inner side surface of the driven portion 21K as shown in Fig. 14B, the rotation position detecting member 88 detects the cam member 38. Hence, the driving control unit 57 determines that the cam member 38 is at an urging position. Accordingly, the cam member 38 and the driven portion 21K can be desirably brought into contact with each other and separated from each other depending on the rotation position of the cam member 38. Therefore, the cam member 38 can be brought into contact with the inner surface side of the driven portion 21K at a desirable timing, so that the operation member 21 can be automatically moved from the first position P1 to the second position P2.

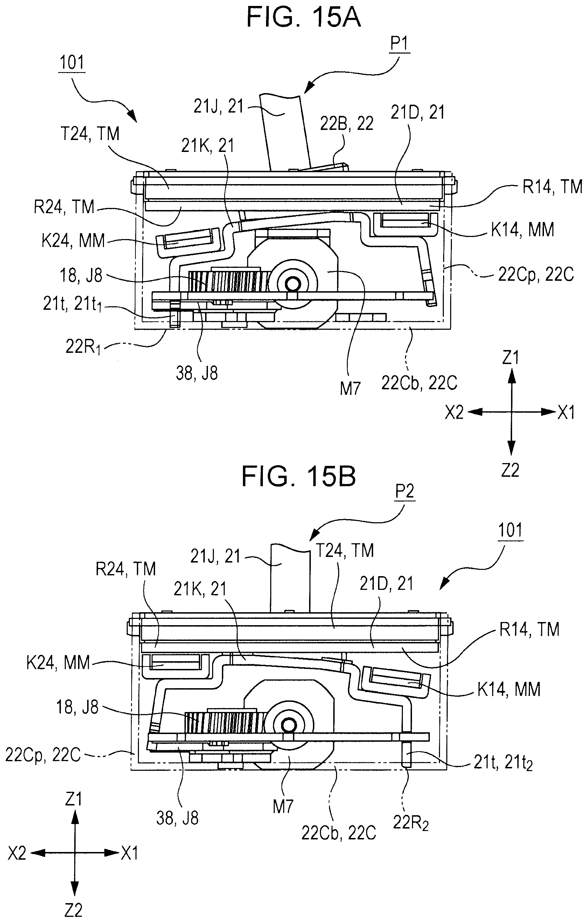

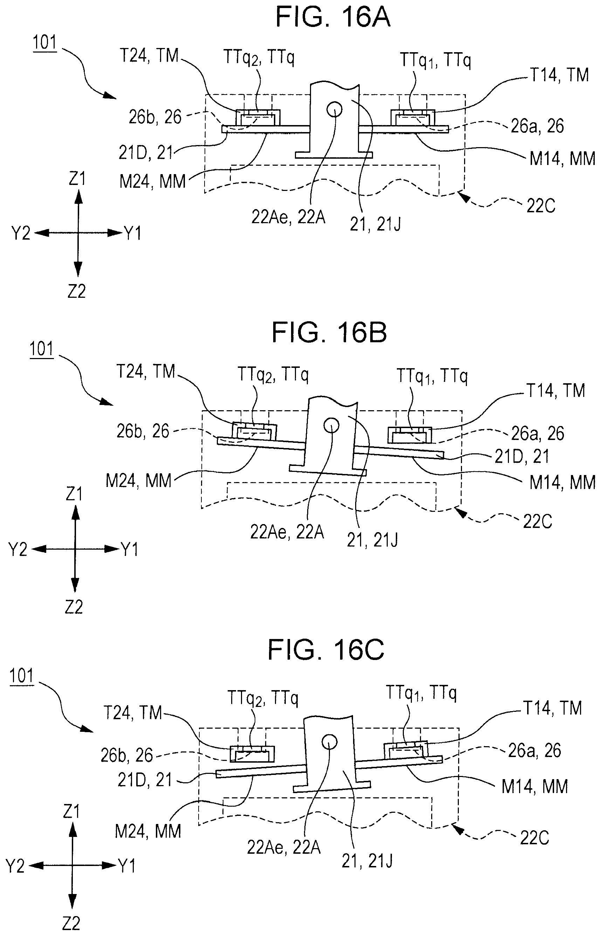

Next, a motion of the multi-directional input operation device 101 configured as described above is described. Figs. 15A and 15B are illustrations describing a motion in the multi-directional input operation device 101 according to the first embodiment of the invention; Fig. 15A being an illustration of a first position state, Fig. 15B being an illustration of a second position state. Figs. 16A to 16C are schematic illustrations each describing a motion in the multi-directional input operation device 101 according to the first embodiment of the invention, Fig. 16A being an illustration of a state at a reference position, Fig. 16B being an illustration of a tilting state in the Y1 direction, Fig. 16C being an illustration of a tilting state in the Y2 direction.

First, a motion in the first direction D1 in which the operation member 21 moves between the first position P1 and the second position P2 is described with reference to Figs. 15A and 15B.

When the tilting operation is performed in the X2 direction by the operator and the operation member 21 is positioned at the first position P1 (state shown in Fig. 15A) serving as the reference position from the second position P2 serving as the reference position, since the first fixed magnetic body R14 (base member 21D) and the first tilting magnet K14 (movable-side magnetic body MM) are arranged to face each other, and hence the first tilting magnet K14 and the first fixed magnetic body R14 (base member 21D) are attracted to each other. The operation member 21 stays at the first position P1, and the tilted state of the operation member 21 (operation shaft 21J) is held. Simultaneously, since the second tilting magnet K24 (movable-side magnetic body MM) and the second fixed magnetic body R24 (base member 21D) attracted to each other at the second position P2 are separated from each other, a tactile feel due to a change from an attracted state to a separated state can be provided for the operator.

When the tilting operation is performed in the X1 direction by the operator and the operation member 21 is positioned at the second position P2 (state shown in Fig. 15B) serving as the reference position from the first position P1 serving as the reference position, since the second fixed magnetic body R24 (base member 21D) and the second tilting magnet K24 (movable-side magnetic body MM) are similarly arranged to face each other, the second tilting magnet K24 and the second fixed magnetic body R24 (base member 21D) are attracted to each other. The operation member 21 stays at the second position P2, and the vertical state of the operation member 21 (operation shaft 21J) is held. Simultaneously, since the first tilting magnet K14 and the first fixed magnetic body R14 (base member 21D) attracted to each other at the first position P1 are separated from each other, a tactile feel due to a change from an attracted state to a separated state can be provided for the operator.

In this way, a strong attractive force can be generated by simple parts, such as the permanent magnet EM4 of the movable-side magnetic body MM (first tilting magnet K14 and second tilting magnet K24) and the base member 21D of the counter-side magnetic body TM. The operation member 21 can be easily fixed at the first position P1 and the second position P2. Further, since the permanent magnet EM4 is covered with the yoke YM4, a stronger attractive force can be generated by the simple configuration.

Also, since the driving force of the motor M7 can be transmitted to the operation member 21 by using the motor M7 and the coupling mechanism J8, and the coupling mechanism J8 can be selectively brought into contact with and separated from the operation member 21 at a desirable timing, when the operation member 21 moves from the second position P2 to the first position P1, the coupling mechanism J8 can be separated to the outside of the movable range of the operation member 21, and when the operation member 21 automatically moves from the first position P1 to the second position P2, the coupling mechanism J8 can be brought into contact with the operation member 21. Accordingly, the operation member 21 can be operated in the multiple directions (first direction D1 and second direction D2), and the operation member 21 can be automatically moved from the first position P1 to the second position P2 at a desirable timing. For example, if the multi-directional input operation device 101 is applied to the vehicle shift device 600, the desirable timing may be a timing that an ignition switch of the vehicle is turned "OFF" as a trigger, and the operation member 21 can be automatically returned from the first position P1 to the second position P2 at this timing. Hence, the shift knob 60N (operation member 21) may be normally present at the second position P2 when the vehicle is started.

Also, since the coupling mechanism J8 and the operation member 21 can be selectively brought into contact with each other and separated from each other at a desirable timing, for example, when the operation member 21 is at the second position P2, the tilting operation by the operator from the second position P2 to the first position P1 may be restricted as long as the cam member 38 is in contact with the inner surface side of the driven portion 21K.

Also, the movable-side magnetic body MM (first tilting magnet K14 and second tilting magnet K24) and the counter-side magnetic body TM (first fixed magnetic body R14 and second fixed magnetic body R24) can hold the operation member 21 at either of the first position P1 and the second position P2. Electricity does not have to be normally applied to the motor unlike related art. Accordingly, problems that heat may be generated at the motor and energy consumption is not reduced can be addressed.

Next, the motion in the second direction D2 different from the first direction D1 is described with reference to Figs. 5A and 5B, and 16A to 16C.

The motion in the second direction D2 is performed by the tilting operation of the operator while the first position P1 or the second position P2 serves as the reference position (see Fig. 5B). In this case, the motion while the second position P2 serves as the reference position is described in detail. It is to be noted that the motion in the second direction D2 while the first position P1 serves as the reference position is similar to the motion described below. Hence, the description is omitted.

First, when the operation member 21 is at the reference position of the second position P2, as shown in Fig. 16A, the base member 21D of the operation member 21 is parallel to the Y direction. The pair of movable-side magnetic bodies MM (first movable magnetic body M14 and second movable magnetic body M24) and the two counter-side magnetic bodies TM (first counter magnetic body T14 and second counter magnetic body T24) are also held horizontal.

Also, when the operation member 21 is at the reference position (second position P2), the contact portion TTq₁ of the first counter magnet T14 and the contact portion TTq₂ of the second counter magnet T24 face the two stopper portions 26 (26a, 26b) provided at the frame body 22C.

When the tilting operation in the Y1 direction is performed by the operator, the operation member 21 is rotated around the first tilting shaft 22Ae as the rotation axis, the operation member 21 is tilted from the reference position (second position P2) and is positioned at the upstream position S21 (see Fig. 5B). By the rotation, the base member 21D performs the tilting motion in the Y1 direction, and is tilted to a position shown in Fig. 16B. When the operation member 21 is at the upstream position S21, the contact portions TTq₁ of the first counter magnet T14 contact the stopper portions 26a. The stopper portions 26a stop the tilting motion of the first counter magnet T14. In contrast, the first movable magnetic body M14 (base member 21D) in a portion facing the first counter magnet T14 continues the tilting motion. The first counter magnet T14 and the first movable magnetic body M14 (base member 21D) attracted to each other at the second position P2 are detached and separated from each other. Therefore, by the change from the attracted state to the separated state, a tactile feel (click feel) can be obtained when the operation member 21 moves from the second position P2 to the upstream position S21. Although it is obvious, as shown in Fig. 16B, the second counter magnet T24 at the opposite side moves in a direction to be separated from the stopper portion 26b by the tilting motion of the base member 21D in the Y1 direction.

Further, when the tilting operation in the Y1 direction is continued by the operator, a corner portion 21c of the downward extending portion 21m (see Fig. 10B) of the driven portion 21K of the operation member 21 contacts the bottom plate portion 22Cb of the frame body 22C, and hence the tilting motion of the operation member 21 in the Y1 direction is stopped. Accordingly, an excessive tilting operation in the Y1 direction by the operator can be restricted. Also in the case of the tilting operation in the Y2 direction by the operator, a corner portion 21c of the downward extending portion 21m at the opposite side contacts the bottom plate portion 22Cb of the frame body 22C. Accordingly, the tilting motion in the Y2 direction of the operation member 21 can be stopped.

Also, as shown in Fig. 16B, in the first embodiment of the invention, the movable-side magnetic body MM (first movable magnetic body M14) and the counter-side magnetic body TM (first counter magnet T14) are arranged at positions where the attractive forces acting between the movable-side magnetic body MM and the counter-side magnetic body TM are not lost when the operation member 21 is tilted and the movable-side magnetic body MM and the counter-side magnetic body TM arranged at the side of the tilting motion in the Y1 direction are separated from each other. Accordingly, at the upstream position S21, when the force of the tilting operation by the operator is removed, the separated movable-side magnetic body MM and counter-side magnetic body TM are attracted to each other again by their attractive forces. Accordingly, the operation member 21 can be automatically returned to the reference position without use of an urging member for automatic return.

Also, in the first embodiment of the invention, since the counter-side magnetic body TM (first counter magnet T14) is the permanent magnet EM4, and the permanent magnet EM4 is covered with the yoke YN4, a strong detachment force or a strong attraction force of the movable-side magnetic body MM (first movable magnetic body M14) and the counter-side magnetic body TM can be easily generated with the simple configuration. Accordingly, a strong operation sense and a tactile feel can be provided for the operator.

Also, in the first embodiment of the invention, when the tilting operation of the operation member 21 is performed to the first position P1 or the second position P2, the guide protrusion portion 21t (21t₁, 21t₂) is inserted into the guide groove portion 22R (22R₁, 22R₂). Hence, when the tilting operation of the operation member 21 is performed in the second direction D2 (Y direction), as shown in Figs. 13A and 13B, the guide protrusion portion 21t (21t₁, 21t₂) can move in the slit portion 22Rs of the guide groove portion 22R (22R₁, 22R₂) in the Y direction. Thus, the tilting operation of the operation member 21 can be performed in the second direction D2 (Y direction).

Accordingly, when the operation member 21 is tilted in the second direction D2 other than the tilting direction (fist direction D1) and the tilting operation is performed in the first direction D1 (tilting direction), the guide protrusion portion 21t (21t₁, 21t₂) contacts the slit portion 22Rs of the guide groove portion 22R (22R₁, 22R₂) . Therefore, the tilting motion in the tilting direction (first direction D1) of the operation member 21 can be restricted without a complicated mechanism having another member. Therefore, a restriction mechanism with high space-utilization efficiency can be attained, and the size of the multi-directional input operation device 101 can be further reduced.

The motion in the Y1 direction described above is performed also in the case of the tilting operation in the Y2 direction by the operator.

That is, when the operation member 21 is tilted from the reference position (second position P2) shown in Fig. 16A to the downstream position S23 (see Fig. 5B), the contact portions TTq₂ of the second counter magnet T24 contact the stopper portions 26b, and the tilting motion of the second counter magnet T24 is stopped, whereas the tilting motion of the second movable magnetic body M24 (base member 21D) is continued (state shown in Fig. 16C). Accordingly, the second counter magnet T24 and the second movable magnetic body M24 (base member 21D) attracted to each other at the second position P2, are detached and separated from each other. By the change from the attracted state to the separated state, a tactile feel (click feel) at the movement from the second position P2 to the downstream position S23 can be obtained.

Also, the movable-side magnetic body MM (second movable magnetic body M24) and the counter-side magnetic body TM (second counter magnet T24) arranged at the side of the tilting motion in the Y2 direction are arranged at positions where attractive forces acting between the movable-side magnetic body MM and the counter-side magnetic body TM are not lost. Accordingly, at the downstream position S23, when the force of the tilting operation by the operator is removed, the separated movable-side magnetic body MM and counter-side magnetic body TM are attracted to each other again by their attractive forces. Accordingly, the operation member 21 can be automatically returned to the reference position without use of an urging member for automatic return.

As described above, the multi-directional input operation device 101 according to the first embodiment of the invention can perform the tilting motion in the second direction D2 while a tactile feel (click feel) can be provided. That is, when the operation member 21 is tilted from the reference position and positioned at one of a plurality of positions, since the stopper portions 26 (26a, 26b) are provided respectively for the plurality of positions, the tilting motion of the counter-side magnetic body TM (first counter magnet T14 or second counter magnet T24) is stopped. To be specific, when the position is changed from the reference position (second position P2) to the next position (upstream position S21 or downstream position S23), the tilting motion of the counter-side magnetic body TM (first counter magnet T14 or second counter magnet T24) is stopped by the stopper portion 26 (26a or 26b) provided for each position. For example, when the operation member 21 is at the first position P1 (reference position) and when the position is changed from the reference position (first position P1) to the next position (front position S11 or rear position S13), the tilting motion of the counter-side magnetic body TM (first counter magnet T14 or second counter magnet T24) is stopped by the stopper portion 26 (26a or 26b) provided for each position.

Accordingly, at each position (upstream position S21 or front position S11, downstream position S23 or rear position S13), the movable-side magnetic body MM and the counter-side magnetic body TM are detached and separated from each other. A tactile feel can be provided by the change from the attracted state to the separated state at this time. Therefore, as compared with related art, since a sliding mechanism is not provided at a portion that generates a tactile feel, the multi-directional input operation device 101 has high durability.

The multi-directional input operation device 101 according to the first embodiment of the invention can be preferably applied to the vehicle shift device 600 having a shift arrangement (shift pattern) shown in Fig. 5A. Hence, each position (front position S11 or upstream position S21, first position P1 or second position P2, rear position S13 or downstream position S23) of the multi-directional input operation device 101 can be preferably applied to the shift arrangement (shift pattern) of the vehicle shift device 600. Accordingly, a shift operation with a tactile feel can be provided in multiple directions, and the shift knob 60N can be automatically moved at a desirable timing.

Further, the energy consumption of the vehicle shift device 600 can be reduced, and the size of the vehicle shift device 600 can be reduced. Accordingly, the device can be easily mounted on a vehicle.

Advantageous effects of the multi-directional input operation device 101 and the vehicle shift device 600 configured as described above according to the first embodiment of the invention are collectively described below.

With the multi-directional input operation device 101 according to the first embodiment of the invention, by the tilting motion of the operation member 21, the movable-side magnetic body MM and the counter-side magnetic body TM are detached from each other at a certain position, and the movable-side magnetic body MM and the counter-side magnetic body TM are attracted to each other at the next position. Accordingly, an operation feel (holding force) and a tactile feel (click feel) can be provided for the operator with respect to an operation in multiple directions. Also, the coupling mechanism J8 that transmits the driving force of the motor M7 to the operation member 21 can be selectively brought into contact with and separated from the operation member 21. Accordingly, the operation member 21 can be operated in multiple directions, and the operation member 21 can be automatically moved from the first position P1 to the second position P2 at a desirable timing.

Also, since the movable-side magnetic body MM (first tilting magnet K14 and second tilting magnet K24) and the counter-side magnetic body TM (first fixed magnetic body R14 and second fixed magnetic body R24) can hold the operation member 21 at either of the first position P1 and the second position P2, electricity does not have to be normally applied to the motor unlike related art. Accordingly, problems that heat may be generated at the motor and energy consumption is not reduced can be addressed.

Also, there is provided the driven portion 21K that performs the tilting motion in association with the operation member 21, and contacts and is separated from the coupling mechanism J8. The movable-side magnetic body MM and the counter-side magnetic body TM are provided at the one surface side of the driven portion 21K. The motor M7 and the coupling mechanism J8 are provided at the other surface side. Accordingly, components relating to the moving mechanism of the operating member 21 between the first position P1 and the second position P2 can be arranged with high space-utilization efficiency. Accordingly, the size of the multi-directional input operation device 101 can be reduced.

Also, when the operation member 21 is tilted in the second direction D2 other than the tilting direction (fist direction D1) and the tilting operation is performed in the first direction D1 (tilting direction), the guide protrusion portion 21t (21t₁, 21t₂) contacts the slit portion 22Rs of the guide groove portion 22R (22R₁, 22R₂) . Accordingly, the tilting motion in the tilting direction (first direction D1) of the operation member 21 can be restricted without a complicated mechanism having another member. Therefore, a restriction mechanism with high space-utilization efficiency can be attained, and the size of the multi-directional input operation device 101 can be further reduced.

Also, the coupling mechanism J8 includes the gear member 18 that is rotationally driven by the motor M7, and the cam member 38 that is rotationally driven by the gear member 18. Accordingly, the rotational force of the motor M7 can be converted into the rotation motion of the cam member 38 through the gear member 18. At this time, the rotational force of the motor M7 can be converted into a large driving force according to the gear ratio and the cam curve of the cam member 38. Accordingly, a large driving force can be transmitted to the operation member 21 even by using the motor M7 with a small diameter, and the movable-side magnetic body MM and the counter-side magnetic body TM can be separated from each other. Therefore, the coupling mechanism J8 with high space-utilization efficiency can be attained, and the size of the multi-directional input operation device 101 can be further reduced.

Also, the cam member 38 has the standby cam surface 38p and the driving cam surface 38v with different distances from the rotation center 38c of the cam member 38. Accordingly, the coupling mechanism J8 and the operation member 21 can be separated by causing the standby cam surface 38p to face the driven portion 21K, and the driving force of the coupling mechanism J8 can be transmitted to the operation member 21 by bringing the driving cam surface 38v into contact with the driven portion 21K. Since the rotation position detecting member 88 that detects the rotation position of the cam member 38 is provided, the cam member 38 and the driven portion 21K can be desirably brought into contact with each other and separated from each other depending on the rotation position of the cam member 38. Accordingly, the operation member 21 can be easily automatically moved at a desirable timing.

Also, since the movable-side magnetic body MM (first tilting magnet K14 and second tilting magnet K24) and the counter-side magnetic body TM (first counter magnet T14 and second counter magnet T24) are each the permanent magnet EM4, and the permanent magnet EM4 is covered with the yoke (YM4, YN4), the strong detachment force or the strong attraction force of the movable-side magnetic body MM and the counter-side magnetic body TM can be easily generated with the simple configuration. Accordingly, a strong operation sense and a tactile feel can be provided for the operator.

Regarding the vehicle shift device 600 according to the first embodiment of the invention, the multi-directional input operation device 101 that can provide an operation to each position (front position S11 or upstream position S21, first position P1 or second position P2, rear position S13 or downstream position S23) can be preferably applied to the shift arrangement (shift pattern) of the vehicle shift device 600. Accordingly, a shift operation with a tactile feel can be provided in multiple directions, and the shift knob 60N can be automatically moved at a desirable timing.

Further, the energy consumption of the vehicle shift device 600 can be reduced, and the size of the vehicle shift device 600 can be reduced. Accordingly, the device can be easily mounted on a vehicle.

The invention is not limited to the above-described embodiment, and may be implemented by modifying the embodiment, for example, as described below. These modified embodiments also pertain to the technical scope of the invention.

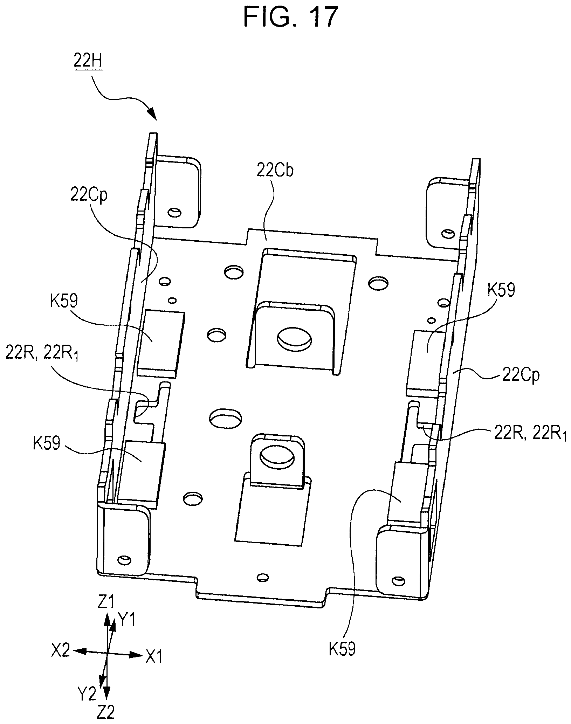

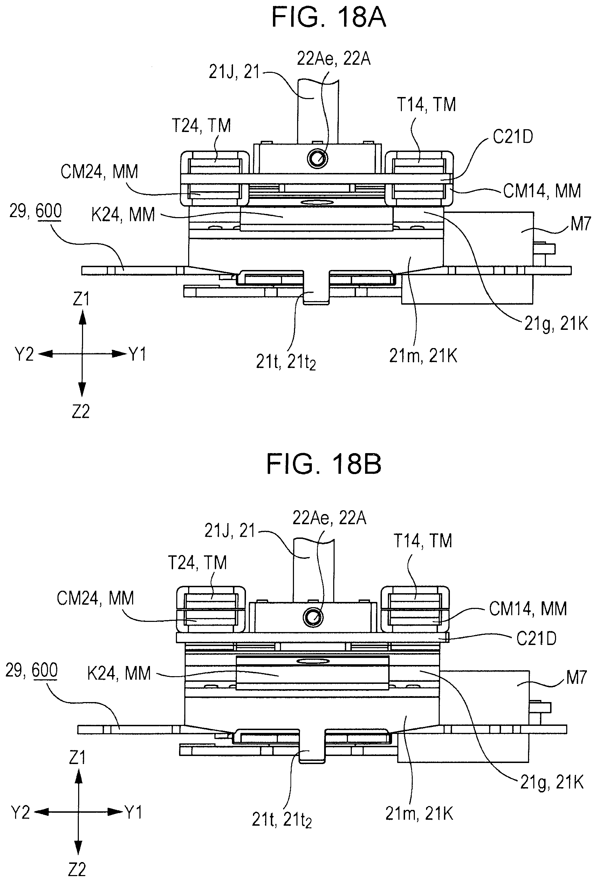

Fig. 17 is an illustration describing a modification of the multi-directional input operation device 101 according to the first embodiment of the invention, Fig. 17 being a perspective view of a frame body 22H according to a first modification. Figs. 18A and 18B are illustrations describing modifications of the multi-directional input operation device 101 according to the first embodiment of the invention, Fig. 18A being a side view of portions of movable-side magnetic bodies MM and counter-side magnetic bodies TM according to a second modification, Fig. 18B being a side view of portions of movable-side magnetic bodies MM and counter-side magnetic bodies TM according to a third modification.

### First Modification

In the first embodiment, the corner portion 21c of the downward extending portion 21m (driven portion 21K) contacts the bottom plate portion 22Cb of the frame body 22C (support body 22) so that the tilting operation in the second direction D2 by the operator is stopped. At this time, as shown in Fig. 17, a cushioning member K59 may be preferably provided at a contact portion. Accordingly, a shock that is generated when the driven portion 21K contacts the frame body 22H can be reduced, and generation of sound due to the contact can be reduced.

### Second and Third Modifications

In the first embodiment, the base member 21D uses the soft magnetic material and portions of the base member 21D are preferably used as the first movable magnetic body M14 and the second movable magnetic body M24. However, a base member C21D may use a non-magnetic material. At this time, as shown in Fig. 18A, a first movable magnetic body CM14 and a second movable magnetic body CM24 may be prepared, and the movable-side magnetic body MM and the counter-side magnetic body TM may be preferably arranged with the base member C21D interposed therebetween. Also, as shown in Fig. 18B, the movable-side magnetic body MM and the counter-side magnetic body TM may be arranged at one side of the base member C21D.

### Fourth Modification

In the first embodiment, the automatic moving motion is provided from the first position P1 to the second position P2; however, it is not limited thereto. For example, the gear member 18 and the cam member 38 may be arranged at opposite sides with the worm 17 interposed therebetween, and the automatic moving motion may be provided from the second position P2 to the first position P1. Also, for example, another pair of the motor M7 and the coupling mechanism J8 may be additionally prepared, and the automatic moving motion may be provided between the first position P1 and the second position P2.

### Fifth Modification

A cushioning member made of synthetic resin may be provided between the contact portion TTq (TTq₁, TTq₂) and the stopper portion 26 (26a, 26b) of the first embodiment. Accordingly, a shock that is generated when the contact portion TTq contacts the stopper portion 26 can be reduced, and generation of sound due to the contact can be reduced.

### Sixth Modification

In the above-described embodiment, the multi-directional input operation device 101 is preferably applied to the vehicle shift device 600 of electronic control system; however, it is not limited thereto. The multi-directional input operation device 101 may be applied to a vehicle shift device of mechanical control system. Also, the application target is not limited to the vehicle shift device, and may be an input device of, for example, a game machine.

The invention is not limited to the above-described embodiments, and may be properly modified within the scope of the appended claims.

## Claims

1. A multi-directional input operation device (101) comprising:
an operation member (21) that can perform a tilting motion in response to a tilting operation by an operator;
a support body (22) that supports the operation member so that the tilting motion is allowed;
position detecting means (5S) for detecting a plurality of positions including at least a pair of a first position and a second position where the operation member is positioned, in response to the tilting operation by the operator;
a plurality of movable-side magnetic bodies (MM) that perform the tilting motion together with the operation member;
a plurality of counter-side magnetic bodies (TM) arranged to respectively face and attract the plurality of movable-side magnetic bodies at the plurality of positions;
a motor (M7) that causes the operation member to automatically perform a moving motion to at least one of the first position and the second position; **characterised in that** it further comprises:
a driving control unit (57) that controls a driving force of the motor; and
a coupling mechanism (J8) that transmits the driving force of the motor and can be selectively brought into contact with and separated from the operation member,
wherein, when the moving motion of the operation member between the first position and the second position is performed by the operator, the driving control unit separates the coupling mechanism to the outside of a movable range of the operation member,
wherein, when the moving motion of the operation member between the first position and the second position is automatically performed, the driving control unit brings the coupling mechanism into contact with the operation member to transmit the driving force so that the movable-side magnetic bodies are separated from the counter-side magnetic bodies,
wherein the operation member has a driven portion (21K) that performs the tilting motion in association with the operation member,
wherein the movable-side magnetic bodies and the counter-side magnetic bodies corresponding to the first position and the second position are provided at one surface side of the driven portion,
wherein the motor and the coupling mechanism are provided at the other surface side of the driven portion, and
wherein the coupling mechanism contacts and is separated from the driven portion.

2. The multi-directional input operation device according to claim 1,
wherein the driven portion has a guide protrusion portion (21t) integrally provided with the driven portion,
wherein a guide groove portion (22R) is provided, the guide groove portion corresponding to at least one of the first position and the second position, the guide protrusion portion being inserted into the guide groove portion when the tilting operation of the operation member is performed in a tilting direction in which the operation member moves between the first position and the second position, and
wherein, when the tilting operation of the operation member is performed in a direction other than the tilting direction and then the tilting operation is performed in the tilting direction, the guide protrusion portion contacts the guide groove portion, and the tilting motion of the operation member in the tilting direction is restricted.

3. The multi-directional input operation device according to claim 1 or 2,
wherein the coupling mechanism includes
a gear member (18) that is rotationally driven by the motor, and
a cam member (38) that is rotationally driven by the gear member.

4. The multi-directional input operation device according to claim 3,
wherein the cam member has a standby cam surface (38p) and a driving cam surface (38v) having different distances from a rotation center of the cam member, and
wherein a rotation position detecting member (88) that detects a rotation position of the cam member is provided.

5. The multi-directional input operation device according to any of claims 1 to 4,
wherein one of a pair of the movable-side magnetic body and the counter-side magnetic body is a permanent magnet (EM4), and
wherein the permanent magnet has a yolk (YM4, YN4) that covers a portion of the permanent magnet other than a counter surface of the permanent magnet facing the other magnetic body.

6. A vehicle shift device (600) comprising:
the multi-directional input operation device according to any of claims 1 to 5;
a control unit (60C) that receives a signal from the multi-directional input operation device and transmits a signal to a vehicle-side device; and
a shift knob (60N) that is engaged with the operation member of the multi-directional input operation device and is gripped by the operator.

## Patentansprüche

1. Multidirektionale Eingabebetätigungsvorrichtung (101), aufweisend:
ein Betätigungselement (21), das eine Kippbewegung in Reaktion auf eine Kippbetätigung durch eine Bedienungsperson ausführen kann;
einen Stützkörper (22), der das Betätigungselement derart abstützt, dass die Kippbewegung ermöglicht ist;
eine Positionserfassungseinrichtung (5S) zum Erfassen einer Mehrzahl von Positionen, die mindestens ein Paar aus einer ersten Position und einer zweiten Position beinhalten, in der das Betätigungselement positioniert ist, in Reaktion auf die Kippbetätigung durch die Bedienungsperson;
eine Mehrzahl von Magnetkörpern (MM) auf der beweglichen Seite, die die Kippbewegung zusammen mit dem Betätigungselement ausführen;
eine Mehrzahl von Magnetkörpern (TM) auf der Gegenseite, die derart angeordnet sind, dass sie der Mehrzahl von Magnetkörpern auf der beweglichen Seite an der Mehrzahl von Positionen jeweils zugewandt sind und diese anziehen;
einen Motor (M7), der das Betätigungselement veranlasst, automatisch einen Bewegungsvorgang in mindestens eine von der ersten Position und der zweiten Position auszuführen;
**dadurch gekennzeichnet, dass** sie ferner Folgendes aufweist:
eine Antriebssteuereinheit (57), die eine Antriebskraft des Motors steuert; und
einen Kopplungsmechanismus (J8), der die Antriebskraft des Motors überträgt und selektiv mit dem Betätigungselement in Kontakt gebracht und von diesem getrennt werden kann,
wobei dann, wenn der Bewegungsvorgang des Betätigungselements zwischen der ersten Position und der zweiten Position durch die Bedienungsperson ausgeführt wird, die Antriebssteuereinheit den Kopplungsmechanismus nach außerhalb eines Bewegungsbereichs des Betätigungselements trennt,
wobei dann, wenn der Bewegungsvorgang des Betätigungselements zwischen der ersten Position und der zweiten Position automatisch ausgeführt wird, die Antriebssteuereinheit den Kopplungsmechanismus mit dem Betätigungselement in Kontakt bringt, um die Antriebskraft zu übertragen, so dass die Magnetkörper auf der beweglichen Seite von Magnetkörpern auf der Gegenseite getrennt werden,
wobei das Betätigungselement einen angetriebenen Bereich (21K) aufweist, der die Kippbewegung in Verbindung mit dem Betätigungselement ausführt, wobei die Magnetkörper auf der beweglichen Seite und die Magnetkörper auf der Gegenseite, die der ersten Position und der zweiten Position entsprechen, auf einer Seite der einen Oberfläche des angetriebenen Bereichs vorgesehen sind,
wobei der Motor und der Kopplungsmechanismus auf der Seite der anderen Oberfläche des angetriebenen Bereichs vorgesehen sind, und
wobei der Kopplungsmechanismus mit dem angetriebenen Bereich in Kontakt tritt und von diesem getrennt wird.

2. Multidirektionale Eingabebetätigungsvorrichtung nach Anspruch 1,
wobei der angetriebene Bereich einen Führungsvorsprungbereich (21t) aufweist, der mit dem angetriebenen Bereich einstückig vorgesehen ist, wobei ein Führungsnutbereich (22R) vorgesehen ist, wobei der Führungsnutbereich mindestens einer von der ersten Position und der zweiten Position entspricht, wobei der Führungsvorsprungbereich in den Führungsnutbereich eingesetzt ist, wenn der Kippvorgang des Betätigungselements in einer Kipprichtung ausgeführt wird, in der sich das Betätigungselement zwischen der ersten Position und der zweiten Position bewegt, und
wobei dann, wenn der Kippvorgang des Betätigungselements in einer anderen Richtung als der Kipprichtung ausgeführt wird und dann der Kippvorgang in der Kipprichtung ausgeführt wird, der Führungsvorsprungbereich mit dem Führungsnutbereich in Kontakt tritt und die Kippbewegung des Betätigungselements in der Kipprichtung eingeschränkt wird.

3. Multidirektionale Eingabebetätigungsvorrichtung nach Anspruch 1 oder 2, wobei der Kopplungsmechanismus ein Zahnradelement (18), das durch den Motor rotationsmäßig angetrieben wird, und ein Steuerflächenelement (38) aufweist, das durch das Zahnradelement rotationsmäßig angetrieben wird.

4. Multidirektionale Eingabebetätigungsvorrichtung nach Anspruch 3,
wobei das Steuerflächenelement eine Bereitschaftssteuerfläche (38p) und eine Antriebssteuerfläche (38v) mit unterschiedlichen Abständen von einem Rotationszentrum des Steuerflächenelements aufweist, und
wobei ein Drehstellungs-Erfassungselement (88) vorgesehen ist, das eine Drehstellung des Steuerflächenelements erfasst.

5. Multidirektionale Eingabebetätigungsvorrichtung nach einem der Ansprüche 1 bis 4,
wobei einer von einem Paar aus dem Magnetkörper auf der beweglichen Seite und dem Magnetkörper auf der Gegenseite ein Permanentmagnet (EM4) ist, und
wobei der Permanentmagnet ein Joch (YM4, YN4) aufweist, das einen anderen Bereich des Permanentmagneten als eine dem anderen Magnetkörper zugewandte Gegenfläche des Permanentmagneten bedeckt.

6. Fahrzeugschaltvorrichtung (600), aufweisend:
die multidirektionale Eingabebetätigungsvorrichtung nach einem der Ansprüche 1 bis 5;
eine Steuereinheit (60C), die ein Signal von der multidirektionalen Eingabebetätigungsvorrichtung empfängt und ein Signal zu einer fahrzeugseitigen Vorrichtung überträgt; und
einen Schaltknopf (60N), der mit dem Betätigungselement der multidirektionalen Eingabebetätigungsvorrichtung in Eingriff steht und von der Bedienungsperson gegriffen wird.

## Revendications

1. Dispositif d'opération d'entrée multidirectionnel (101) comprenant :
un élément de manoeuvre (21) capable d'effectuer un mouvement de basculement en réponse à une opération de basculement de la part d'un opérateur ;
une structure de soutien (22) qui soutient l'élément de manoeuvre de manière à permettre le mouvement de basculement ;
des moyens de détection de position (5S) permettant de détecter une pluralité de positions, dont au moins un couple de positions, à savoir une première position et une deuxième position prises par l'élément de manoeuvre, en réponse à l'opération de basculement effectuée par l'opérateur ;
une pluralité de corps magnétiques côté mobile (MM) qui effectuent le mouvement de basculement avec l'élément de manoeuvre ;
une pluralité de corps magnétiques côté opposé (TM) agencés de manière à faire face à la pluralité de corps magnétiques côté mobile et à les attirer respectivement aux diverses positions ;
un moteur (M7) qui entraîne l'élément de manoeuvre à effectuer automatiquement un mouvement de basculement entre au moins la première position et la deuxième position ;
**caractérisé en ce qu'**il comprend en outre :
une unité de commande d'entraînement (57) qui commande une force d'entraînement du moteur ; et
un mécanisme de couplage (J8) qui transmet la force d'entraînement du moteur et peut être sélectivement mis en contact avec l'élément de manoeuvre ou séparé de ce dernier,
où, lorsque le mouvement de l'élément de manoeuvre entre la première position et la deuxième position est effectué par l'opérateur, l'unité de commande d'entraînement sépare le mécanisme de couplage vers l'extérieur d'une plage mobile de l'élément de manoeuvre,
où, lorsque le mouvement de l'élément de manoeuvre entre la première position et la deuxième position est effectué automatiquement, l'unité de commande d'entraînement établit le contact entre le mécanisme de couplage et l'élément de manoeuvre afin de transmettre la force d'entraînement, de sorte que les corps magnétiques côté mobile sont séparés des corps magnétiques côté opposé,
où l'élément de manoeuvre possède une partie entraînée (21K) qui effectue le mouvement de basculement en association avec l'élément de manoeuvre,
où les corps magnétiques côté mobile et les corps magnétiques côté opposé correspondant à la première position et à la deuxième position sont pourvus sur une surface latérale de la partie entraînée,
où le moteur et le mécanisme de couplage sont pourvus sur l'autre surface latérale de la partie entraînée, et
où le mécanisme de couplage est mis en contact et séparé de la partie entraînée.

2. Le dispositif d'opération d'entrée multidirectionnel selon la revendication 1,
où la partie entraînée possède une partie en saillie de guidage (21t) entièrement intégrée à la partie entraînée,
où une partie avec rainure de guidage (22R) est fournie, ladite rainure de guidage correspondant au moins à la première ou à la deuxième position, la partie en saillie de guidage étant insérée dans la partie avec rainure de guidage quand l'opération de basculement de l'élément de manoeuvre est effectuée dans une direction de basculement où l'élément de manoeuvre évolue entre la première et la deuxième position, et
où, lorsque l'opération de basculement de l'élément de manoeuvre est effectuée dans une direction autre que la direction de basculement et qu'ensuite l'opération de basculement est effectuée dans la direction de basculement, la partie en saillie de guidage entre en contact avec la partie avec rainure de guidage, et le mouvement de basculement de l'élément de manoeuvre dans la direction de basculement est restreint.

3. Le dispositif d'opération d'entrée multidirectionnel selon la revendication 1 ou 2,
où le mécanisme de couplage inclut
un élément de transmission (18) qui est entraîné de manière rotative par le moteur, et
un élément de came (38) qui est entraîné de manière rotative par l'élément de transmission.

4. Le dispositif d'opération d'entrée multidirectionnel selon la revendication 3,
où l'élément de came possède une surface de came d'attente (38p) et une surface de came d'entraînement (38v) possédant des distances différentes par rapport à un centre de rotation de l'élément de came, et
où un élément de détection de la position de rotation (88) est pourvu, qui détecte la position de rotation de l'élément de came.

5. Le dispositif d'opération d'entrée multidirectionnel selon l'une quelconque des revendications 1 à 4,
où une paire faite d'un corps magnétique côté mobile et d'un corps magnétique côté opposé constitue un aimant permanent (EM4), et
où l'aimant permanent possède une anse (YM4, YN4) qui couvre une partie de l'aimant permanent autre que la surface opposée de l'aimant permanent faisant face à l'autre corps magnétique.

6. Un dispositif de changement de vitesse de véhicule (600) comprenant :
le dispositif d'opération d'entrée multidirectionnel selon l'une quelconque des revendications 1 à 5 ;
une unité de commande (60C) qui reçoit un signal du dispositif d'opération d'entrée multidirectionnel et transmet un signal à un dispositif côté véhicule ; et
un pommeau de levier de vitesses (60N) qui est engagé avec l'élément de manoeuvre du dispositif d'opération d'entrée multidirectionnel et qui est tenu par l'opérateur.
